(19) Europäisches Patentamt
European Patent Office
Office européen des brevets

(11) EP 4 275 787 A1

(12) EUROPEAN PATENT APPLICATION
published in accordance with Art. 153(4) EPC

(43) Date of publication:
**15.11.2023 Bulletin 2023/46**

(21) Application number: **22819165.6**

(22) Date of filing: **29.03.2022**

(51) International Patent Classification (IPC):
***B01J 20/281*** *(2006.01)* ***C08F 2/00*** *(2006.01)*

(86) International application number:
**PCT/CN2022/083708**

(87) International publication number:
**WO 2022/257560 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2021 CN 202110645891**

(71) Applicant: **Shenzhen Lifotronic Technology Co., Ltd.**
**Shenzhen, Guangdong 518110 (CN)**

(72) Inventors:
- **DING, Zhong**
  **Shenzhen, Guangdong 518110 (CN)**
- **LIU, Xiancheng**
  **Shenzhen, Guangdong 518110 (CN)**

(74) Representative: **Greaves Brewster LLP**
**Copa House**
**Station Road**
**Cheddar, Somerset BS27 3AH (GB)**

# (54) VINYL MONOMER-POLYVINYL CROSSLINKING AGENT COPOLYMER NON-POROUS MICROSPHERE, PREPARATION METHOD THERFOR, AND APPLICATION THEREOF

(57) The present invention relates to a vinyl monomer-polyvinyl crosslinking agent copolymer non-porous microsphere, a preparation method, and application thereof. The vinyl monomer-polyvinyl crosslinking agent copolymer non-porous microsphere includes a vinyl monomer-polyvinyl crosslinking agent copolymer matrix microsphere modified with a hydroxyl group, and an epoxy compound rafted to the vinyl monomer-polyvinyl crosslinking agent copolymer matrix microsphere via the hydroxyl group. The epoxy compound includes at least two epoxy groups. The vinyl monomer-polyvinyl crosslinking agent copolymer non-porous microsphere has good chemical and mechanical stability, excellent ion exchange performance, and ability to separate hemoglobin and its variants with high specificity.

EP 4 275 787 A1

## Description

### TECHNICAL FIELD

The present invention relates to the technical field of polymer microspheres, and particularly to vinyl monomer-polyvinyl crosslinking agent copolymer non-porous microspheres, a preparation method therefor and an application thereof.

### BACKGROUND

Polymer microspheres generally have features of good spherical shape, small size, large specific surface area, strong adsorption performance, and capability of functionalized modification. Therefore, polymer microspheres are widely used in various industries as functional materials. In recent years, the use of ion exchange high-performance liquid chromatography (HPLC) for detection of biological components has attracted increasing attentions. The liquid chromatographic column loaded with ion-exchange chromatographic microspheres is one of key hardware for separation and detection of biological components by ion exchange high-performance liquid chromatography.

The ion exchange packing loaded into the liquid chromatographic column can be classified into porous packing and non-porous packing. Compared with porous packing, non-porous packing has the advantages of greater mass transfer and smaller lateral diffusion, and can separate a sample more rapidly and efficiently. However, the non-porous packing microspheres have the shortcoming of low specific surface area, resulting in low separation capacity, thereby limiting its many applications in protein separation. In addition, the natural polymer-based chromatographic column packing usually exhibit poor rigidity and are not strong enough to withstand pressure, and are mainly used for purification and separation of biological drugs.

The traditional vinyl monomer-vinyl crosslinking agent copolymer non-porous microspheres used as chromatographic column packing are mainly made of methyl acrylate copolymers or styrene-divinyl benzene copolymers, which have good rigidity. However, up to now, such non-porous microspheres have poor ion exchange performance, low load capacity, and strong non-specific adsorption for biological components, such as protein molecules, which affects the service life of the chromatographic column packing.

### SUMMARY

In view of the above, the present invention provides a vinyl monomer-polyvinyl crosslinking agent copolymer non-porous microsphere, a preparation method, and an application thereof. The vinyl monomer-polyvinyl crosslinking agent copolymer non-porous microsphere has good chemical and mechanical stability, excellent ion exchange performance, and low non-specific adsorption for biological components, such as protein molecules.

The specific technical solutions are as follows.

In one aspect, the present invention provides a vinyl monomer-polyvinyl crosslinking agent copolymer non-porous microsphere, including:

- a vinyl monomer-polyvinyl crosslinking agent copolymer matrix microsphere, wherein the vinyl monomer-polyvinyl crosslinking agent copolymer matrix microsphere is modified with a hydroxyl group; and
- an epoxy compound grafted to the vinyl monomer-polyvinyl crosslinking agent copolymer matrix microsphere via the hydroxyl group, wherein the epoxy compound includes at least two epoxy groups.

In an embodiment, the epoxy compound is at least one of sorbitol tetraglycidyl ether, pentaerythritol tetraglycidyl ether, polyglycerol polyglycidyl ether, diglycerol triglycidyl ether, 1,4-butanediol diglycidyl ether, glycerol diglycidyl ether, glycerol triglycidyl ether, ethylene glycol diglycidyl ether, poly(ethylene glycol) diglycidyl ether, neopentyl glycol diglycidyl ether, or 2,2-bis(4-(2,3-epoxypropoxy)phenyl)propane. Preferably, the epoxy compound is sorbitol tetraglycidyl ether or polyglycerol polyglycidyl ether.

In an embodiment, the vinyl monomer-polyvinyl crosslinking agent copolymer matrix microsphere includes:

- a vinyl monomer-polyvinyl crosslinking agent copolymer particle, wherein the vinyl monomer-polyvinyl crosslinking agent copolymer particle is modified with an epoxy group, and the vinyl monomer-polyvinyl crosslinking agent copolymer particle is formed by crosslinking a polystyrene seed microsphere with a vinyl monomer via a polyvinyl crosslinking agent, and the vinyl monomer includes the epoxy group; and
- a hydroxyl compound grafted to the vinyl monomer-polyvinyl crosslinking agent copolymer particle via the epoxy group, wherein the hydroxyl compound includes the hydroxyl group.

In an embodiment, the vinyl monomer-polyvinyl crosslinking agent copolymer matrix microsphere has a degree of crosslinking of 50% to 80%. Preferably, the vinyl monomer-polyvinyl crosslinking agent copolymer matrix microsphere has a degree of crosslinking of 65% to 75%.

In an embodiment, the vinyl monomer is at least one of 4-vinylphenyl glycidyl ether, 4-vinylbenzyl glycidyl ether, or glycidyl methacrylate.

In an embodiment, the polystyrene seed microsphere has an average particle size D50 of 0.3 μm to 5 μm. Preferably, the polystyrene seed microsphere has an average particle size D50 of 0.5 μm to 3 μm.

In an embodiment, the hydroxyl compound is at least one of ethylene glycol, 1,3-propylene glycol, or 1,4-butanediol.

In an embodiment, the polyvinyl crosslinking agent is at least one of divinyl benzene, divinyl methylbenzene, trivinyl benzene, ethylene glycol dimethacrylate, poly(ethylene glycol) dimethacrylate, divinyl naphthalene, or trivinyl naphthalene. Preferably, the polyvinyl crosslinking agent is divinyl benzene.

In an embodiment, the amount of the vinyl monomer is 5% to 40% of the total weight of the vinyl monomer and the polyvinyl crosslinking agent. Preferably, the amount of the vinyl monomer is 10% to 30% of the total weight of the vinyl monomer and the polyvinyl crosslinking agent. More preferably, the amount of the vinyl monomer is 10% to 20% of the total weight of the vinyl monomer and the polyvinyl crosslinking agent.

In an embodiment, the molar ratio of the epoxy compound to the epoxy group modified on the vinyl monomer-polyvinyl crosslinking agent copolymer particle is (1-20): 1. Preferably, the molar ratio of the epoxy compound to the epoxy group modified on the vinyl monomer-polyvinyl crosslinking agent copolymer particle is (3-10): 1. More preferably, the molar ratio of the epoxy compound to the epoxy group modified on the vinyl monomer-polyvinyl crosslinking agent copolymer particle is (4-6): 1.

In an embodiment, the vinyl monomer-polyvinyl crosslinking agent copolymer non-porous microsphere further includes an active group grafted onto the epoxy compound. The active group, for example, can be a group containing a functional group.

In an embodiment, the active group includes an NTA group. Unless otherwise indicated specifically, the NTA group refers to an amino tricarboxymethyl structural group.

In an embodiment, the NTA group includes an active terminal group. The active terminal group is at least one of an aspartate terminal group, a lysine terminal group, a cysteine terminal group, or a glutamate terminal group.

In an embodiment, the vinyl monomer-polyvinyl crosslinking agent copolymer non-porous microsphere has an average particle size D50 of 2 μm to 10 μm. Preferably, the vinyl monomer-polyvinyl crosslinking agent copolymer non-porous microsphere has an average particle size D50 of 3 μm to 6 μm.

In another aspect, the present invention provides a method for preparing a vinyl monomer-polyvinyl crosslinking agent copolymer non-porous microsphere, including following steps of:

forming a vinyl monomer-polyvinyl crosslinking agent copolymer matrix microsphere, wherein the vinyl monomer-polyvinyl crosslinking agent copolymer matrix microsphere is modified with a hydroxyl group; and

grafting an epoxy compound onto the vinyl monomer-polyvinyl crosslinking agent copolymer matrix microsphere via a hydroxyl reaction, wherein the epoxy compound includes at least two epoxy groups.

In an embodiment, the epoxy compound is at least one of sorbitol tetraglycidyl ether, pentaerythritol tetraglycidyl ether, polyglycerol polyglycidyl ether, diglycerol triglycidyl ether, 1,4-butanediol diglycidyl ether, glycerol diglycidyl ether, glycerol triglycidyl ether, ethylene glycol diglycidyl ether, poly(ethylene glycol) diglycidyl ether, neopentyl glycol diglycidyl ether, or 2,2-bis(4-(2,3-epoxypropoxy) phenyl) propane. Preferably, the epoxy compound is at least one of sorbitol tetraglycidyl ether or polyglycerol polyglycidyl ether.

In an embodiment, the step of forming the vinyl monomer-polyvinyl crosslinking agent copolymer matrix microsphere includes:

forming a vinyl monomer-polyvinyl crosslinking agent copolymer particle, modified with an epoxy group, including carrying out a polymerization among a polystyrene seed microsphere as a seed, a vinyl monomer, and a polyvinyl crosslinking agent in a medium in the presence of a stabilizer and an emulsifier through a seed swelling method, the vinyl monomer including the epoxy group; and

grafting a hydroxyl compound onto the vinyl monomer-polyvinyl crosslinking agent copolymer particle via an epoxy reaction, the hydroxyl compound including the hydroxyl group.

In an embodiment, the vinyl monomer is at least one of 4-vinylphenyl glycidyl ether, 4-vinylbenzyl glycidyl ether, or glycidyl ether methacrylate.

In an embodiment, the polystyrene seed microsphere has an average particle size D50 of 0.3 μm to 5 μm. Preferably, the polystyrene seed microsphere has an average particle size D50 of 0.5 μm to 3 μm.

In an embodiment, the hydroxyl compound is at least one of ethylene glycol, 1,3-propylene glycol, or 1,4-butanediol.

In an embodiment, the polyvinyl crosslinking agent is at least one of divinyl benzene, divinyl methylbenzene, trivinyl benzene, ethylene glycol dimethacrylate, poly(ethylene glycol) dimethacrylate, divinyl naphthalene, or trivinyl naphthalene. Preferably, the polyvinyl crosslinking agent is divinyl benzene.

In an embodiment, the amount of the vinyl monomer is 5% to 40% of the total weight of the vinyl monomer and the polyvinyl crosslinking agent. Preferably, the amount of the vinyl monomer is 10% to 30% of the total weight of the vinyl monomer and the polyvinyl crosslinking agent. More preferably, the amount of the vinyl monomer is 10% to 20% of the total weight of the vinyl monomer and the polyvinyl crosslinking agent.

In an embodiment, the molar ratio of the epoxy compound to the epoxy group modified on the vinyl monomer-polyvinyl crosslinking agent copolymer particle is (1-20): 1. Preferably, the molar ratio of the epoxy compound to the epoxy group modified on the vinyl monomer-polyvinyl crosslinking agent copolymer particle is (3-10):1. More preferably, the molar ratio of the epoxy compound to the epoxy group modified on the vinyl monomer-polyvinyl crosslinking agent copolymer particle is (4-6):1.

In an embodiment, an initiator adopted in the polymerizing is an oil-soluble initiator. Preferably, the oil-soluble initiator is an oil-soluble peroxide or an oil-soluble azo compound.

In an embodiment, the amount of the initiator is 0.1% to 10% of the weight of the vinyl monomer. Preferably, the amount of the initiator is 0.5% to 5% of the weight of the vinyl monomer.

In an embodiment, the stabilizer is a water-soluble polymer. Preferably, the stabilizer is at least one of polyvinyl alcohol, polyvinyl pyrrolidone, or modified cellulose.

In an embodiment, the amount of the stabilizer is 0.5% to 15% of the weight of the vinyl monomer. Preferably, the amount of the stabilizer is 1% to 8% of the weight of the vinyl monomer.

In an embodiment, the emulsifier is at least one of a cationic surfactant, a non-ionic surfactant, an amphoteric surfactant, or an anionic surfactant.

In an embodiment, the cationic surfactant is at least one of a quaternary ammonium salt, an alkyl pyridinium salt, or an amine salt.

In an embodiment, the non-ionic surfactant is at least one of an alkyl ether polymer or an alkyl phenol polyalkoxy compound.

In an embodiment, the amphoteric surfactant is at least one of an amino acid surfactant or a betaine surfactant.

In an embodiment, the anionic surfactant is at least one of a carboxylate surfactant, a sulfonate surfactant, a sulfate surfactant, or a phosphate surfactant.

In an embodiment, the amount of the emulsifier is 0.5% to 10% of the weight of the vinyl monomer. Preferably, the amount of the stabilizer is 0.1% to 5% of the weight of the vinyl monomer.

In an embodiment, the method for preparing the vinyl monomer-polyvinyl crosslinking agent copolymer non-porous microsphere further includes a step of forming an active group on the epoxy compound by reacting or grafting. The active group can be, for example, a group containing a functional group. Optionally, the active group includes a NTA group.

In an embodiment, the NTA group is formed by a N,N-bis(carboxymethyl) lysine method, an active terminal amino acid method, a dicarboxylic acid structure amino acid carboxylation method, or a method including forming an aldehyde group first and then an $\alpha$-amino acid.

In yet another aspect, the present invention provides use of the vinyl monomer-polyvinyl crosslinking agent copolymer non-porous microsphere as described above, or the vinyl monomer-polyvinyl crosslinking agent copolymer non-porous microsphere prepared by the method as described above, as chromatographic column packing.

In still another aspect, the present invention provides use of the vinyl monomer-polyvinyl crosslinking agent copolymer non-porous microsphere as described above, or the vinyl monomer-polyvinyl crosslinking agent copolymer non-porous microsphere prepared by the method as described above, in detection of a biological component.

In an embodiment, the biological component is a hemoglobin-based biological component.

The present invention has the following advantages over prior art.

The vinyl monomer-polyvinyl crosslinking agent copolymer non-porous microsphere of the present invention is based on a vinyl monomer-polyvinyl crosslinking agent copolymer matrix microsphere modified with a hydroxyl group and an epoxy compound containing at least two epoxy groups grafted and coupled thereto, so that the microsphere has abundant epoxy groups. The grafting of the epoxy groups can compensate for the shortcomings that the non-porous (ion-exchange) packing microsphere has low specific surface area and low ion-exchange capacity, so that the specific adsorption ability of the non-porous packing to a target biological component is comparable to that of a porous packing. In addition, with the advantages of maximum mass transfer and minimum transverse diffusion in chromatographic separation, the non-porous packing can separate biological samples quickly and efficiently. In conclusion, the vinyl monomer-polyvinyl crosslinking agent copolymer non-porous microsphere can have both the advantages of high load and high separation efficiency.

Moreover, the vinyl monomer-polyvinyl crosslinking agent copolymer non-porous microsphere with epoxy groups has good chemical and mechanical stability such as rigidity. Furthermore, more ion exchange groups (such as the NTA structure for polycarboxylation) can be aggregated at the surface of the microsphere in a small specific surface area. The microsphere modified with epoxy groups on its surface can be used as the chromatographic column packing, showing excellent performances in analysis, separation, and purification of biological macromolecules, and eliminating non-specific adsorption of biological molecules on the hydrophobic structure.

Further, after modification of the vinyl monomer-polyvinyl crosslinking agent copolymer non-porous microsphere with the NTA structure, the separation effect for hemoglobin-based biological components is remarkable. Not only HbAlc can be quantitative analyzed, but also 16 types of hemoglobin-based biological components can be separated and analyzed. The common hemoglobin variants in the world can also be analyzed qualitatively and quantitatively, and high specific separation of hemoglobin and its variants can be achieved. In in-vitro diagnostic tests, using such as a H9 glycosylated hemoglobin analyzer from Shenzhen Lifotronic Technology Co., Ltd., hemoglobin and its variants can be separated and analyzed with the comprehensive advantages of high separation ability (analytical spectrum), low protein non-specific adsorption (long column lifetime), high compressive resistance (16MPa), etc.

In addition, the vinyl monomer-polyvinyl crosslinking agent copolymer non-porous microsphere also has the advantages of mono- and good dispersity, and uniform and controllable particle size.

## BRIEF DESCRIPTION OF THE DRAWINGS

FIG. 1 shows a scanning electron microscope image of PST seed microspheres prepared in Example 3.
FIG. 2 shows a particle size distribution of PST seed microspheres prepared in Example 3.
FIG. 3 shows a scanning electron microscope image of PSDVB-Epoxy microspheres prepared in Example 4.
FIG. 4 shows a particle size distribution of PSDVB-Epoxy microspheres prepared in Example 4.
FIG.5 shows fitted curves of column pressure of the chromatographic columns made of PSDVB-Epoxy microspheres prepared in Examples 4 to 7 with respect to flow rate in a range from 0.5mL/min to 5.25mL/min in Test Example 1.
FIG. 6 shows peak area statistics for 20 times of sample injection obtained by using column No. 1 in Test Example 2.
FIG. 7 shows peak area statistics for 20 times of sample injection obtained by using column No. 2 in Test Example 2.
FIG. 8 shows peak area statistics for 20 times of sample injection obtained by using column No. 3 in Test Example 2.
FIG. 9 shows a chromatogram obtained by using PSDVB-NTA microspheres prepared in Example 11 as chromatographic column packing in Test Example 3.
FIG. 10 shows a chromatogram obtained by using PSDVB-NTA microspheres prepared in Example 12 as a chromatographic column packing in Test Example 3.
FIG. 11 shows a chromatogram obtained by using PSDVB-NTA microspheres prepared in Example 13 as a chromatographic column packing in Test Example 3.
FIG. 12 shows a chromatogram obtained by using PSDVB-NTA microspheres prepared in Example 14 as a chromatographic column packing in Test Example 3.
FIG. 13 shows a chromatogram obtained by using PSDVB-NTA microspheres prepared in Comparative Example 1 as a chromatographic column packing in Test Example 3.
FIG. 14 shows a chromatogram obtained by using PSDVB-NTA microspheres prepared in Comparative Example 2 as a chromatographic column packing in Test Example 3.
FIG. 15 shows liquid chromatograms of a sample under test and quality control materials in Test Example 4.
FIG. 16 shows liquid chromatograms of samples under test in Test Example 5.
FIG. 17 shows repeatability test results in Test Example 6.
FIG. 18 shows correlation test results in Test Example 7.
FIG. 19 shows a quality control graph in Test Example 8.
FIG. 20 shows detection chromatograms of Samples 1 to 5 in Test Example 9.
FIG. 21 shows a liquid chromatogram of Hb J-Bangkok whole blood sample of Sample 6 in Test Example 9.
FIG. 22 shows a liquid chromatogram of Hb G-Taipei whole blood sample of Sample 7 in Test Example 9.
FIG. 23 shows a liquid chromatogram of Hb Q-Thailand whole blood sample of Sample 8 in Test Example 9.

## DETAILED DESCRIPTION

The vinyl monomer-polyvinyl crosslinking agent copolymer non-porous microsphere of the present invention, the method and use thereof will now be described in detail with reference to the specific embodiments. The present invention may be implemented in many different ways and is not limited to the embodiments described herein. In contrast, these embodiments are provided for the purpose of a more thorough understanding of the disclosure of the present

invention.

Unless otherwise defined, all technical and scientific terms used herein have the same meaning as those normally understood by those skilled in the art to which the present invention belongs. The terms used herein in the description of the present invention are only for the purpose of describing specific embodiments and not intended to limit the present invention.

The polyvinyl crosslinking agent refers to a crosslinking agent including at least two vinyl groups.

The present invention provides a vinyl monomer-polyvinyl crosslinking agent copolymer non-porous microsphere, including a vinyl monomer-polyvinyl crosslinking agent copolymer matrix microsphere and an epoxy compound, wherein the vinyl monomer-polyvinyl crosslinking agent copolymer matrix microsphere is modified with a hydroxyl group, the epoxy compound is grafted to the vinyl monomer-polyvinyl crosslinking agent copolymer matrix microsphere via the hydroxyl group, and the epoxy compound includes at least two epoxy groups.

Further, vinyl monomer-polyvinyl crosslinking agent copolymer particles modified with epoxy groups, e.g. PSDVB-Epoxy microspheres, are formed by polymerizing a vinyl monomer including an epoxy group, instead of a styrene monomer, with a polyvinyl crosslinking agent. Then the epoxy groups of the vinyl monomer-polyvinyl crosslinking agent copolymer particles modified with epoxy groups are hydrolyzed under the action of a hydroxyl compound to form hydroxyl groups, facilitating subsequent coupling of a polyepoxy compound.

It is found through research that a vinyl monomer and a polyvinyl crosslinking agent can be polymerized to form a vinyl monomer-polyvinyl polymer, and then the vinyl monomer-polyvinyl polymer can be modified with a compound including epoxy groups, thereby grafting the epoxy groups to the vinyl monomer-polyvinyl polymer. However, if the modification is performed after the polymerization, some modification sites will be wrapped into the core of the polymer matrix microsphere and thus inactivated, resulting in the limited amount of grafted epoxy groups, and resulting in low hydrophilizing conversion rate of the vinyl monomer-polyvinyl polymer (especially the strong hydrophobic polymer PSDVB having the benzene rings), as the hydrophilization is by grafting hydroxyl groups or epoxy groups. In the present invention, a vinyl monomer including an epoxy group instead of a styrene monomer is polymerized with a polyvinyl crosslinking agent to form vinyl monomer-polyvinyl crosslinking agent copolymer particles modified with epoxy groups via a one-step reaction to complete polymerization and modification, which can prevent some modification sites from being wrapped into the core of the polymer matrix microsphere and inactivated. Therefore, the hydrophilizing (i.e., by grafting hydroxyl groups or epoxy groups) conversion rate of the vinyl monomer-polyvinyl polymer (especially the strong hydrophobic polymer PSDVB having the benzene rings) can be improved, and the amount of grafted epoxy groups can be increased. Moreover, the use of the vinyl monomer-polyvinyl crosslinking agent copolymer particles modified with epoxy groups as matrix microspheres can confer the vinyl monomer-polyvinyl crosslinking agent copolymer non-porous microspheres with excellent compressive resistance.

Specifically, the vinyl monomer-polyvinyl crosslinking agent copolymer matrix microsphere includes a vinyl monomer-polyvinyl crosslinking agent copolymer particle and a hydroxyl compound, wherein the vinyl monomer-polyvinyl crosslinking agent copolymer particle is modified with an epoxy group, and the hydroxyl compound is grafted to the vinyl monomer-polyvinyl crosslinking agent copolymer particle via the epoxy group. The vinyl monomer-polyvinyl crosslinking agent copolymer particle is formed by crosslinking a polystyrene seed microsphere with a vinyl monomer via a polyvinyl crosslinking agent. The vinyl monomer includes the epoxy group. The hydroxyl compound includes the hydroxyl group.

In an embodiment, the vinyl monomer-polyvinyl crosslinking agent copolymer matrix microsphere has a degree of crosslinking of 50% to 80%, preferably 65% to 75%.

In an embodiment, the polystyrene seed microsphere has an average particle size D50 of 0.3 μm to 5 μm. Preferably, the polystyrene seed microsphere has an average particle size D50 of 0.5 μm to 3 μm. The present invention adopts the polystyrene seed microsphere with the above monodisperse particle size, which is beneficial to obtain monodisperse vinyl monomer-polyvinyl crosslinking agent copolymer non-porous microspheres with controllable and uniform particle size, and to improve the ability of the vinyl monomer-polyvinyl crosslinking agent copolymer non-porous microspheres to identify substances such as hemoglobin variants. In an embodiment, the vinyl monomer-polyvinyl crosslinking agent copolymer non-porous microsphere has an average particle size D50 of 2 μm to 10 μm. Preferably, the vinyl monomer-polyvinyl crosslinking agent copolymer non-porous microsphere has an average particle size D50 of 3 μm to 6 μm. The appearance and average particle size of the above-mentioned microspheres are determined by scanning electron microscopy (SEM) and laser particle size analyzer. Preferably, the polystyrene seed microspheres are made of a non-crosslinked linear polymer and formed by dispersion polymerization. The use of the polystyrene seed microspheres made of the non-crosslinked linear polymer is beneficial to obtain monodisperse vinyl monomer-polyvinyl crosslinking agent copolymer non-porous microspheres with uniform particle size.

In an embodiment, the vinyl monomer is at least one of 4-vinylphenyl glycidyl ether, 4-vinylbenzyl glycidyl ether, or glycidyl ether methacrylate. Preferably, the vinyl monomer is at least one of 4-vinylphenyl glycidyl ether or 4-vinylbenzyl glycidyl ether.

Specifically, 4-vinylphenyl glycidyl ether is prepared from 4-hydroxystyrene and epichlorohydrin; 4-vinylbenzyl glycidyl ether is prepared from 4-(chloromethyl)styrene and glycidol.

In an embodiment, the polyvinyl crosslinking agent is at least one of divinyl benzene, divinyl methylbenzene, trivinyl benzene, ethylene glycol dimethacrylate, divinyl naphthalene, or trivinyl naphthalene. Preferably, the polyvinyl crosslinking agent is divinyl benzene.

In an embodiment, the amount of the vinyl monomer is 5% to 40% of the total weight of the vinyl monomer and the polyvinyl crosslinking agent. Preferably, the amount of the vinyl monomer is 10% to 30% of the total weight of the vinyl monomer and the polyvinyl crosslinking agent. More preferably, the amount of the vinyl monomer is 10% to 20% of the total weight of the vinyl monomer and the polyvinyl crosslinking agent.

In an embodiment, the hydroxyl compound is at least one of ethylene glycol, 1,3-propylene glycol, or 1,4-butanediol.

Further, the epoxy group of the vinyl monomer-polyvinyl crosslinking agent copolymer particle is hydrolyzed under the action of the hydroxyl compound, and then coupled with a polyepoxy compound to introduce a multi-epoxy structure into the structure, thereby obtaining the vinyl monomer-polyvinyl crosslinking agent copolymer non-porous microsphere with multiple epoxy groups.

In an embodiment, the epoxy compound is at least one of sorbitol tetraglycidyl ether, pentaerythritol tetraglycidyl ether, polyglycerol polyglycidyl ether, diglycerol triglycidyl ether, 1,4-butanediol diglycidyl ether, glycerol diglycidyl ether, glycerol triglycidyl ether, ethylene glycol diglycidyl ether, poly(ethylene glycol) diglycidyl ether (whose molecular weight can be 200 to 2000), neopentyl glycol diglycidyl ether, or 2,2-bis(4-(2,3-epoxypropoxy)phenyl)propane. Preferably, the epoxy compound is at least one of sorbitol tetraglycidyl ether or polyglycerol polyglycidyl ether.

In an embodiment, the molar ratio of the epoxy compound to the epoxy group modified on the vinyl monomer-polyvinyl crosslinking agent copolymer particle is (1-20): 1. Preferably, the molar ratio of the epoxy compound and the epoxy group modified on the vinyl monomer-polyvinyl crosslinking agent copolymer particle is (3-10):1. More preferably, the molar ratio of the epoxy compound and the epoxy group modified on the vinyl monomer-polyvinyl crosslinking agent copolymer particle is (4-6): 1. Most preferably, the molar ratio of the epoxy compound and the epoxy group modified on the vinyl monomer-polyvinyl crosslinking agent copolymer particle is 5:1.

Further, active groups optionally including NTA groups are grafted onto the vinyl monomer-polyvinyl copolymer particle modified with multiple epoxy groups, such as PSDVB-mEpoxy, to obtain a polycarboxy-enriched microsphere, e.g. PSDVB-NTA, which can be used as a weak cation-exchange packing for liquid chromatography. Specifically, the NTA group is grafted onto the epoxy compound. It should be noted that the active group is not limited to the NTA group, but can be other active groups, such as those containing a functional group such as $-SO_3H$, $-NH_2$, etc. The needed active group can be coupled to the vinyl monomer-polyvinyl monomer microsphere with multiple epoxy groups.

In an embodiment, the NTA group includes an active terminal group, and the active terminal group is at least one of an aspartate terminal group, a lysine terminal group, a cysteine terminal group, or a glutamate terminal group.

In an embodiment, the method for forming the NTA group can be an active terminal amino acid method, a N,N-bis(carboxymethyl) lysine method, a dicarboxylic acid structure amino acid carboxylation method (wherein the dicarboxylic acid structure amino acid preferably is an acidic amino acid), or a method including forming an aldehyde group on the microsphere surface first, and then forming an $\alpha$-amino acid (referred to Chinese patent application publication No. CN109663384A), and then forming the NTA group, etc.

The present invention further provides a method for preparing a vinyl monomer-polyvinyl crosslinking agent copolymer non-porous microsphere, including following steps of:

forming a vinyl monomer-polyvinyl crosslinking agent copolymer matrix microsphere, wherein the vinyl monomer-polyvinyl crosslinking agent copolymer matrix microsphere is modified with a hydroxyl group; and
grafting an epoxy compound onto the vinyl monomer-polyvinyl crosslinking agent copolymer matrix microsphere via a hydroxyl reaction, wherein the epoxy compound includes at least two epoxy groups.

Further, the step of forming the vinyl monomer-polyvinyl crosslinking agent copolymer matrix microsphere includes following steps of:

forming a vinyl monomer-polyvinyl crosslinking agent copolymer particle, wherein the vinyl monomer-polyvinyl crosslinking agent copolymer particle is modified with an epoxy group, and the vinyl monomer-polyvinyl crosslinking agent copolymer particle is formed by carrying out a polymerization among a polystyrene seed microsphere as a seed, a vinyl monomer, and a polyvinyl crosslinking agent in a medium in the presence of a stabilizer and an emulsifier through a seed swelling method, and the vinyl monomer includes the epoxy group; and
grafting an epoxy compound onto the vinyl monomer-polyvinyl crosslinking agent copolymer particle via an epoxy reaction, wherein the hydroxyl compound includes the hydroxyl group.

It is found through research that a vinyl monomer-polyvinyl polymer can be formed by polymerizing polystyrene and a polyvinyl benzene aromatic compound, and then the vinyl monomer-polyvinyl polymer can be modified with a

compound including epoxy groups to graft the epoxy groups to the vinyl monomer-polyvinyl polymer. However, if the modification is performed after the polymerization, some modification sites will be wrapped into the core of the polymer matrix microsphere and thus inactivated, resulting in the limited amount of grafted epoxy groups and thus resulting in low hydrophilizing conversion rate of the vinyl monomer-polyvinyl polymer (especially the strong hydrophobic polymer PSDVB having the benzene rings), as the hydrophilization is by grafting hydroxyl groups or epoxy groups. In the present invention, a polystyrene seed microsphere is used as a seed and polymerized with a vinyl monomer modified with an epoxy group and a polyvinyl crosslinking agent in the presence of a stabilizer and an emulsifier, to complete polymerization and modification via one-step reaction, thereby forming the vinyl monomer-polyvinyl crosslinking agent copolymer particles modified with epoxy groups, which can prevent some modification sites from being wrapped into the core of the polymer matrix microsphere and inactivated. Therefore, the hydrophilizing (i.e., by grafting hydroxyl groups or epoxy groups) conversion rate of the vinyl monomer-polyvinyl polymer (especially the strong hydrophobic polymer PSDVB having benzene rings) can be improved, and the amount of grafted epoxy groups can be increased.

In an embodiment, an initiator adopted in the polymerization is an oil-soluble initiator. Preferably, the oil-soluble initiator is an oil-soluble peroxide or an oil-soluble azo compound. Specifically, the oil-soluble peroxide can be, for example, dibenzoyl peroxide, dicaprylyl peroxide, lauroyl peroxide, etc.; and the oil-soluble azo compound can be, for example, 2,2'-azobisisobutyronitrile, 2,2'-azobisisocapronitrile, etc.

In an embodiment, the amount of the initiator is 0.1% to 10% of the weight of the vinyl monomer. Preferably, the amount of the initiator is 0.5% to 5% of the weight of the vinyl monomer.

In an embodiment, the stabilizer is a water-soluble polymer. Preferably, the stabilizer is at least one of polyvinyl alcohol, polyvinyl pyrrolidone, or a modified cellulose.

In an embodiment, the amount of the stabilizer is 0.5% to 15% of the weight of the vinyl monomer. Preferably, the amount of the stabilizer is 1% to 8% of the weight of the vinyl monomer.

In an embodiment, the emulsifier refers to a suitable surfactant, for example, at least one of a cationic surfactant, a non-ionic surfactant, an amphoteric surfactant, or an anionic surfactant.

Specifically, the cationic surfactant is at least one of a quaternary ammonium salt, an alkyl pyridinium salt, or an amine salt. The non-ionic surfactant is at least one of an alkyl ether polymer or an alkyl phenol polyalkoxy compound, such as alkyl phenol polyethoxylates. The amphoteric surfactant is at least one of an amino acid amphoteric surfactant, such as dodecyl aminopropionic acid, or a betaine amphoteric surfactant, such as sulfobetaine. The anionic surfactant is at least one of a carboxylate surfactant, a sulfonate surfactant, a sulfate surfactant, or a phosphate surfactant.

In an embodiment, the amount of the emulsifier is 0.05% to 10% of the weight of the vinyl monomer. Preferably, the amount of the stabilizer is 0.1% to 5% of the weight of the vinyl monomer.

In order to better illustrate the preparation process and mechanism of the above-mentioned vinyl monomer-polyvinyl crosslinking agent copolymer non-porous microsphere, not as a limitation, the preparation process is as follows:

S1, forming 4-vinylphenyl glycidyl ether as a vinyl monomer including an epoxy group.

4-vinylphenyl glycidyl ether is synthesized by reacting 4-hydroxystyrene with epichlorohydrin in an alkaline environment. The reaction mechanism is represented by formula (I):

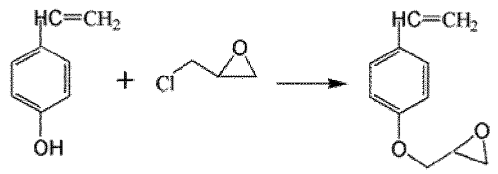

formula (I)

S2, forming 4-vinylbenzyl glycidyl ether as a vinyl monomer including an epoxy group.

4-vinylbenzyl glycidyl ether is synthesized by reacting 1-(chloromethyl) -4-vinylbenzene with glycidol in an alkaline environment. The reaction mechanism is represented by formula (II):

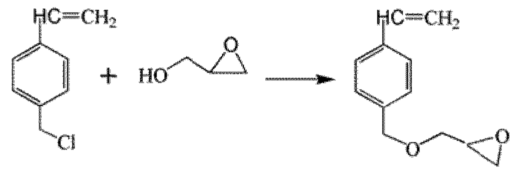

formula (II)

S3, forming a polystyrene (PST) seed by polymerizing a styrene (St) monomer. The reaction mechanism is represented by formula (III):

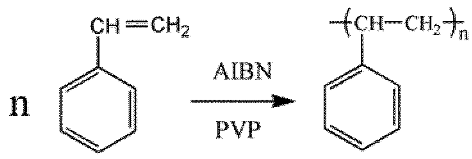


formula (III)

S4, forming vinyl monomer-polyvinyl crosslinking agent copolymer particles with epoxy groups on the surface thereof, e.g., PSDVB-Epoxy.

The vinyl monomer-polyvinyl crosslinking agent copolymer particles with epoxy groups on the surface, e.g., PSDVB-Epoxy, are synthesized from the vinyl monomer including the epoxy group and a polyvinyl crosslinking agent by using a seed swelling method with the PST seeds as a template.

Preferably, the PST seeds are used as a template, and 4-vinylbenzyl glycidyl ether (ST-Epoxy) is used as the vinyl monomer including the epoxy group.

Preferably, the vinyl monomer-polyvinyl crosslinking agent copolymer particles with epoxy groups on the surface thereof, e.g., PSDVB-Epoxy, are formed by reacting the PST seeds, a sodium dodecyl sulfonate (SDBS)/water mixed phase, 4-vinylbenzyl glycidyl ether (ST-Epoxy), and a divinylbenzene (DVB)/oil mixed phase. The reaction mechanism is represented by formula (IV):

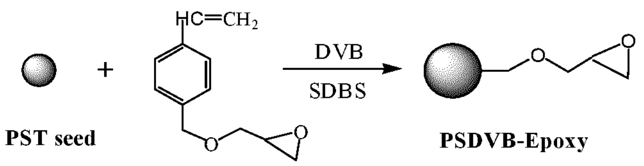


formula (IV)

S5, forming vinyl monomer-polyvinyl crosslinking agent copolymer microspheres with multiple epoxy groups on the surface thereof, e.g., PSDVB-mEpoxy.

The vinyl monomer-polyvinyl crosslinking agent copolymer microspheres with multiple epoxy groups on the surface thereof, e.g., PSDVB-mEpoxy, are formed by hydrolyzing the epoxy groups on the surface of the vinyl monomer-polyvinyl crosslinking agent copolymer particles, e.g., PSDVB-Epoxy, and then coupling with a polyepoxy compound.

Preferably, the polyepoxy compound is sorbitol tetraglycidyl ether.

Preferably, the step of hydrolyzing the epoxy groups on the surface of the vinyl monomer-polyvinyl crosslinking agent copolymer particles, e.g., PSDVB-Epoxy, and then coupling with the polyepoxy compound includes: reacting the vinyl monomer-polyvinyl crosslinking agent copolymer particles modified with epoxy groups on the surface thereof with ethylene glycol, epichlorohydrin, and a catalyst $BF_3 \cdot (CH_3CH_2)_2O$ in dioxane as a solvent for hydrophilic modification to increase the surface hydroxyl groups and chain length, and then directly reacting with sorbitol tetraglycidyl ether in ethanol in an alkaline environment or added with an appropriate amount of sodium cyanoborohydride, to obtain the vinyl monomer-polyvinyl crosslinking agent copolymer microspheres with multiple epoxy groups on the surface thereof, e.g., PSDVB-mEpoxy. The reaction mechanism is represented by formula (V):

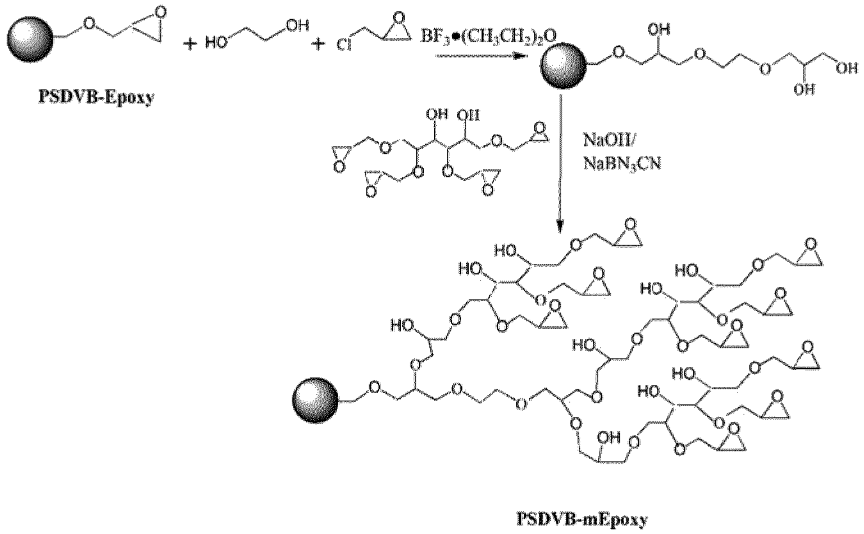


formula (V)

S6, forming polycarboxy-enriched microspheres, e.g., PSDVB-NTA.

The polycarboxy-enriched microspheres, e.g., PSDVB-NTA, are formed by converting the multiple epoxy groups on the surface of the vinyl monomer-polyvinyl crosslinking agent copolymer microspheres, e.g. PSDVB-mEpoxy, into tricarboxylic acid groups to form a NTA structure.

Preferably, the polycarboxy-enriched microspheres, e.g., PSDVB-NTA, are formed by an active terminal amino acid method, including: reacting the epoxy groups on the surface of the vinyl monomer-polyvinyl crosslinking agent copolymer microspheres, e.g. PSDVB-mEpoxy, with an active terminal amino acid, preferably lysine or cysteine under an alkaline condition, e.g., 8.4≤pH≤9.0, to form α-amino acid directly on the microsphere surface with a molar ratio of 1:1; and then dropping bromoacetic acid step by step under the alkaline condition to form the NTA structure on the surface, resulting in the polycarboxy-enriched microspheres, e.g. PSDVB-NTA. The reaction mechanism is represented by formula (VI):

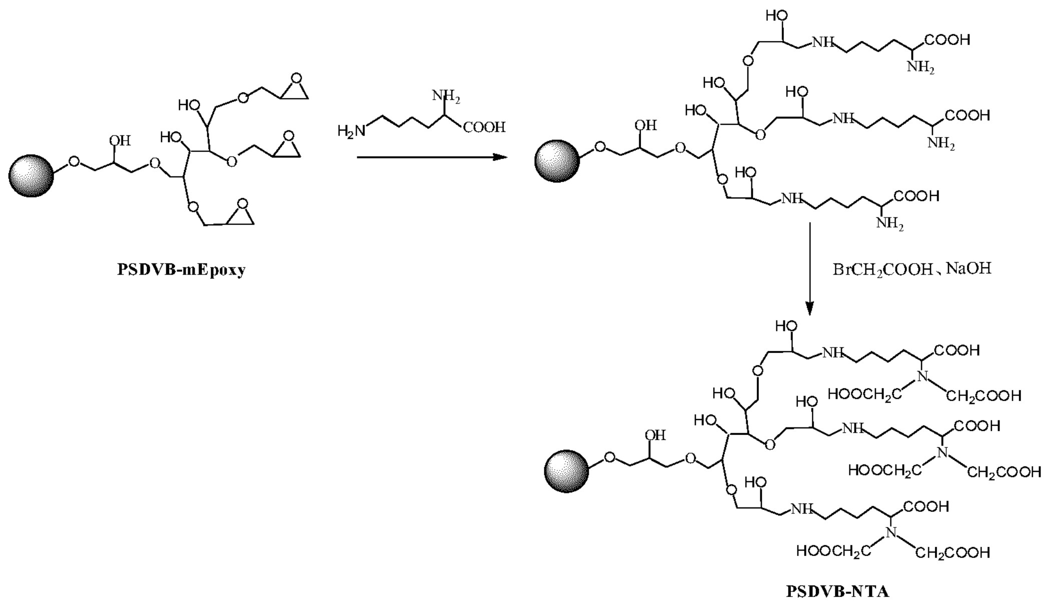


formula (VI)

In the above preparation method, on the one hand, the introduction of the multiple epoxy groups in the preparation process of the microspheres can ensure good chemical properties and mechanical stability such as rigidity. Moreover,

more ion exchange groups can be aggregated on the surface of the microsphere in a small specific surface area, and thus the detection and separation effect of hemoglobins are remarkable. On the other hand, the polycarboxylation process is simple and feasible, coupling the multiple epoxy groups on the microsphere surface with active terminal amino acid. An excellent performance can be achieved in the analysis, separation and purification of biomacromolecules, especially in detection of hemoglobin-based biomacromolecular components. Not only HbAlc can be analyzed quantitatively, but also 16 types of hemoglobins can be separated and analyzed. The common hemoglobin variants in the world can also be analyzed qualitatively and quantitatively.

The present invention also provides the use of the above-mentioned vinyl monomer-polyvinyl crosslinking agent copolymer non-porous microspheres, and the vinyl monomer-polyvinyl crosslinking agent copolymer non-porous microspheres prepared by the above-mentioned method, as chromatographic column packing. Further, the chromatographic column packing refers to a weak cation-exchange packing for liquid chromatography, which can be used in diagnostic detection in vitro, such as in medical devices, and in particular can be used in detection of hemoglobin-based biomacromolecular components. For example, determination of the accurate content of glycosylated hemoglobin (HbAlc) in blood by ion-exchange high-performance liquid chromatography is recognized internationally as a gold standard for the diagnosis of diabetes. The glycosylated hemoglobin analyzer is a high-performance liquid chromatography (HPLC) medical device for detecting blood glucose in diabetics. A liquid chromatographic column packed with ion-exchange chromatographic microspheres is one of key hardware of the glycosylated hemoglobin analyzer.

In order to separate hemoglobin-based biological components, some researchers have performed treatment on the surface of non-porous packing microspheres. For example, the hydrophilically modified weak cation exchange packing including non-porous microspheres grafted with polyacrylamide on the surface thereof can be used for hemoglobin detection, but this packing has poor separation effect on hemoglobin variants. As another example, the polydisperse sulfonic acid-type cation exchange polymer microspheres can be used for hemoglobin detection, which has the advantages of low equipment requirements, low HPLC system pressure under a high-speed condition, and rapid detection of glycosylated hemoglobins, but has poor ability to identify hemoglobin variants due to non-uniform particle size distribution and low resolution.

The vinyl monomer-polyvinyl crosslinking agent copolymer non-porous microspheres of the present invention can be used as the chromatographic column packing of the glycosylated hemoglobin analyzer to directly detect HbAlc in whole blood, and the intra-assay and inter-assay coefficient of variation (CV) of HbAlc can be less than 3%, obtaining accurate results. The HbAlc detection result is not affected by the presence of variant hemoglobins and derivatives thereof, and is particularly suitable for the diagnosis of the diabetes and the monitoring of the blood glucose index. Moreover, it can separate hemoglobin and its variants with high specificity, and can separate and analyze 16 types of hemoglobin-based biological components.

In addition, the vinyl monomer-polyvinyl crosslinking agent copolymer non-porous microspheres also have the advantages of being monodisperse, good dispersibility, and uniform and controllable particle size.

The present invention also provides the use of the above-mentioned vinyl monomer-polyvinyl crosslinking agent copolymer non-porous microspheres, and the vinyl monomer-polyvinyl crosslinking agent copolymer non-porous microspheres prepared by the above-mentioned method in the detection of hemoglobin-based biomacromolecular components. It also can be understood that the hemoglobin-based biological component detection is an in vitro detection method, with immediate objective to detect tissues or body fluids that have been detached from a human or animal body to obtain information as an intermediate result, rather than to obtain a diagnostic result or a health condition.

The specific Examples are provided as follows.

Unless otherwise specified, there is no unmentioned component other than unavoidable impurities in the following test examples. Unless otherwise specified, the chemicals and instruments in the examples are conventional options in the art. Experimental methods without indicating specific conditions in the examples are carried out according to conventional conditions, such as those described in the literature, books, or recommended by the manufacturer.

Unless otherwise specified, samples under test in the following examples are fresh blood samples from the Peking University Shenzhen Hospital. The equipment for detecting hemoglobin-based substance is a commercial high-performance liquid chromatograph. The diluent is deionized water.

Unless defined otherwise, all technical and scientific terms used herein have the same meaning as commonly understood by those skilled in the art to which the present invention belongs. The terminology used in the specification of the present invention is for the purpose of describing specific embodiments only and is not intended to limit the present invention.

Unless otherwise specified, in the following description:

HbA1a (Hemoglobin-A1a) refers to lactosylated hemoglobin.

HbA1b (Hemoglobin-A1b) refers to fructosylated hemoglobin.

HbAlc (Stable Glycated Hemoglobin) refers to a stable glucosylated hemoglobin, and the mean blood glucose level in the last 2 to 3 months can be characterized by the HbAlc level.

LA1c (Labile Glycated Hemoglobin) refers to an unstable glycated hemoglobin, and the glycation intermediate Schiff base can be degraded to glucose and hemoglobin.
HbA0 (Non-glycated Hemoglobin) refers to non-glycated hemoglobin, which accounts for more than 80% of the hemoglobin of a normal person.
HbF (Fetal Hemoglobin) refers to fetal hemoglobin.
HbA2 (A2 Hemoglobin) refers to hemoglobin HbA2 and is a β-thalassemia factor, whose increased level is mainly found in mild β-thalassemia.
P3 (Peak3) and P4 (Peak4) are degradation peaks of hemoglobin HbA0, typically in an amount of less than 5%. If the blood sample is not fresh or other variant hemoglobin is present, P3 and P4 levels would increase.
HbE (HbE Variant Hemoglobin) is an abnormal hemoglobin formed by substituting Glu (glutamate) at position 26 of the β-globin chain with Lys (lysine). HbE is one of the most common abnormal hemoglobin of the β-globin chain, and is mainly distributed in Southeast Asian countries. In China, HbE is mainly found in the south of the Yangtze River and in the coastal areas.
HbS (HbS Variant Hemoglobin) is an abnormal hemoglobin formed by substituting Glu (glutamate) at position 6 of the β-globin chain with Val (valine). Homozygous HbS is called sickle cell disease, and HbS is most commonly found in North Africa and North America.
HbC (HbC Variant Hemoglobin) is an abnormal hemoglobin formed by substituting Glu (glutamate) at position 6 of the β-globin chain with Lys (lysine), and is mainly distributed in West Africa.
HbD (HbD Variant Hemoglobin) is distributed in Northwest India, and North and South America, and is mainly carried by the people from the Panjab region of India and the Indians.
HbJ-Bangkok (J-Bangkok Variant Hemoglobin) is an abnormal hemoglobin formed by substitution Gly (glycine) at position 56 of the β-globin chain with Asp (aspartic acid), and is highly prevalent in Southern China.
Hb G-Taipei (G-Taipei Variant Hemoglobin) is an abnormal hemoglobin formed by substituting Glu (glutamate) at position 22 of the β-globin chain with Gly (glycine), and is highly prevalent in Northern China.
Hb Q-Thailand (Q-Thailand Variant Hemoglobin) is an abnormal hemoglobin formed by substituting Asp (aspartic acid) at position 74 of the α-globin chain with His (histidine), and is highly prevalent in Northern China.

The characterization involved in the examples is illustrated below:

(1) Surface morphology characterization of microspheres: scanning electron microscopy (SEM) is used for characterizing surface morphology of microspheres.
(2) Particle size of microspheres: a commercial laser particle analyzer is used for determining particle size of microspheres.
(3) Epoxy value of microspheres: the epoxy value of microspheres is determined by perchloric acid titration as follows. 0.05 g microspheres are immersed in 10 mL chloroform for 1 hour and ultrasonically dispersed in a conical flask. 10 mL tetraethylammonium bromide solution and 2 drops crystal violet indicator are added to the conical flask. The solution in the conical flask is titrated with V mL calibrated perchloric acid standard solution (0.1 M) until the solution is changed from blue to bright green and remained unchanged for 2 hours. A blank control experiment is also performed to consume $V_0$ mL perchloric acid standard solution. The epoxy value of microspheres is calculated by the following equation.

$$E= (V-V_0) *0.1/10$$

(4) Ion exchange capacity (IEC) of microspheres: the ion exchange capacity (IEC) of microspheres is determined as follows.

11 g microspheres and 150 mL sulfuric acid solution (0.5 mol/L) are added to a flask, stirred and immersed overnight. The immersed microspheres are washed with deionized water for several times to be neutral, dried and left to stand. 1 g dried microspheres are added in a conical flask, and 0.08 L standard NaOH solution (0.05 mol/L) is added to the conical flask at 35°C, and shaken slightly to be even in 35°C water bath for 1 hour. Filtrate A is obtained after filtration of the microspheres. The microspheres are washed successively with 20 mL of sodium chloride solution for four times, and filtrate B is obtained after filtration of the microspheres. Filtrates A and B are mixed thoroughly to obtain mixture C, then 20 mL mixture C is poured into a conical flask. Two drops of phenolphthalein indicator are added to the flask and titrated with 0.05 mol/L standard hydrochloric acid solution until the solution is changed from purple to colorless and remained unchanged within 30 seconds, indicating the end point, and the volume of 0.05 mol/L standard hydrochloric acid consumed is recorded as $V_{HCl}$. The ion exchange capacity (IEC) of microspheres is calculated by the following equation.

$$IEC= (0.05\times0.08-8\times0.05\times V_{HCl})/V\ (eq/L)$$

**Example 1.** Synthesis of 4-vinylphenyl glycidyl ether

4-hydroxystyrene (7.22 g, 60.1mmol) and ethanol (about 10 mL) are added in a 250 mL three-neck flask, and dissolved by stirring. Absolute ethanol (50 mL) and NaOH (3.12 g, 78.0 mmol, mole ratio of 1.3) are added in a 100 mL beaker equipped with a magnetic stir bar and stirred to dissolve for 30 min, and then added in the three-neck flask. Epichlorohydrin (14.1 mL, 180 mmol, 3 × mole ratio of 1.3) is then added rapidly in the three-neck flask using a dropping funnel. The reaction solution is stirred at a rotation speed of 150 rpm at room temperature to gradually become cloudy and precipitate sodium chloride slowly. After the reaction is continued for 16 hours, 100 mL water is added to dissolve the precipitated sodium chloride, and the mixture is extracted with hexane (2×100mL) using a separatory funnel. The organic phases are pooled and dried with anhydrous $MgSO_4$. The solvent is removed from the oil phase by rotary evaporation under vacuum at 35°C to obtain crude product of 4-vinylphenyl glycidyl ether (10.71g).

Purification: 10 mg hydroquinone inhibitor is added to the crude product and high vacuum distillation is carried out at 83°C to obtain distilled 4-vinylphenyl glycidyl ether as a light-yellow oil with a small amount of impurities. Purification is continued through a FLASH silica gel column using n-hexane/dichloromethane (80/20, V/V) as an eluent to remove most impurities with relatively high polarity. After column chromatography purification, 4-vinylphenyl glycidyl ether is recrystallized in 200 mL n-hexane at -20°C. The final product is dried under vacuum at 35°C to obtain 5.730 g purified 4-vinylphenyl glycidyl ether, with a content of 98.0% and a yield of 54%.

**Example 2.** Synthesis of 4-vinylbenzyl glycidyl ether

Sodium hydride (60% in mineral oil, 13.1 g, 327.60 mmol, at a mole ratio of 2.00) is added to DMF (300 mL) under argon atmosphere in a 500 mL three-neck flask, and glycidol (27.15 mL, 459.1 mmol, at a mole ratio of 2.50) is dropped therein at 0°C. The reaction mixture is stirred at a controlled rotation speed of 150 rpm for 30 min, then 1-(chloromethyl) -4-vinylbenzene (23.3 mL, 163.80 mmol, at a mole ratio of 1.00) is dropped therein, and further stirred at room temperature for 4 hours. The mixture is extracted with ethyl acetate (400mL). Saturated $NH_4Cl$ aqueous solution (200mL) is added to quench the reaction and the aqueous layer is further extracted with ethyl acetate (3×100mL). The organic layers are pooled and dried with anhydrous $Na_2SO_4$. The solvent is removed from the oil phase by rotary evaporation under vacuum at 35 °C. The residue is purified by FLASH column using n-hexane/dichloromethane (80/20, V/V) as an eluent to remove most impurities with relatively high polarity. After purification by column chromatography, the solvent is removed by rotary evaporation under vacuum at 35 °C to obtain 27g 4-vinylbenzyl glycidyl ether, with a content of 95.5% and a yield of 86%.

**Example 3.** Synthesis of PST seed microspheres

500 g isopropanol and 10.0 g PVP are added in a 1000 mL beaker and completely dissolved. Then 3.65 g sodium diisooctyl sulfosuccinate and 85 mL water are added and dissolved by stirring at room temperature to obtain solution I. 1.0 g AIBN and 50 g styrene (St) are dissolved by stirring to obtain solution II. Solution II is added to solution I in a 2000 mL three-necked flask purged with nitrogen and mixed evenly by stirring, and then the mixed solution is introduced to a reactor and heated to 65 °C while being stirred at a rotation speed of 250 rpm under nitrogen protection, and kept for 6 hours. After the reaction is ended, the reaction solution is poured out, and centrifuged at a rotation speed of 5000 rpm for about 10 min. The upper layer of the reaction solution is discarded, and the rest is washed with 200 mL ethanol for three times and with 200 mL ultrapure water for six times, and centrifuged at a rotation speed of 5000 rpm to obtain the PST seeds. The particle size D50 is determined to be 1.50 μm by scanning electron microscopy (SEM), as shown in FIGS. 1 and 2.

**Example 4.** Synthesis of crosslinked polystyrene-divinylbenzene microspheres with epoxy groups on the surface thereof (PSDVB-Epoxy) having a degree of crosslinking of 70%

1.8 g sodium dodecylbenzene sulfonate (SDBS) is added to 600 g deionized water and completely dissolved by stirring to obtain mixed phase I (aqueous phase). 18.75 g 4-vinylbenzyl glycidyl ether (the monomer obtained in Example 2), 131.25 g divinyl benzene (DVB), and 3.75 g dicaprylyl peroxide as an initiator are added in a 500 mL beaker and completely dissolved by magnetic stirring to obtain mixed phase II (oil phase). The mixed phase I and the mixed phase II are added in a beaker and then ultrasonically emulsified into an emulsion of about 0.5 μm to 1 μm. 4.1g PST seeds obtained in Example 3, the mixed phase I (aqueous phase) and the mixed phase II (oil phase) are added in a beaker, evenly mixed by magnetic stirring, and then swelled at room temperature under a controlled rotation speed of

100 rpm for 24 hours. Then, 243g of a 2% PVA solution is added and stirred at a rotation speed of 150 rpm for 30 min, and the temperature is raised to 75 °C under nitrogen protection and kept for 12 hours. After the reaction is ended, the reaction solution is filtered by suction through a qualitative filter paper in a Buchner funnel, washed with 500 mL deionized water for three times, and washed and filtered by suction with 300 mL ethanol for three times and with 300 mL acetone for three times, to obtain monodispersed non-porous crosslinked microspheres (PSDVB-Epoxy) having a degree of crosslinking of 70%. The particle size D50 is determined to be 5.01 μm by scanning electron microscopy (SEM), as shown in FIGS. 3 and 4. The epoxy value of the microspheres is 0.65 mmol/g.

**Example 5.** Synthesis of crosslinked polystyrene-divinylbenzene microspheres with epoxy groups on the surface thereof (PSDVB-Epoxy) having a degree of crosslinking of 70%

1.8 g sodium dodecylbenzene sulfonate (SDBS) is added to 600 g deionized water and completely dissolved by stirring to obtain mixed phase I (aqueous phase). 18.75 g 4-vinylphenyl glycidyl ether (the monomer obtained in Example 1), 131.25 g divinyl benzene (DVB), and 3.75 g dicaprylyl peroxide as an initiator are added in a 500 mL beaker and completely dissolved by magnetic stirring to obtain mixed phase II (oil phase). The mixed phase I and the mixed phase II are added in a beaker and then ultrasonically emulsified into an emulsion of about 0.5 μm to 1 μm. 4.1g PST seeds obtained in Example 3, the mixed phase I (aqueous phase) and the mixed phase II (oil phase) are added in a beaker, evenly mixed by magnetic stirring, and then swelled at room temperature under a controlled rotation speed of 100 rpm for 24 hours. Then, 243 g of a 2 % PVA solution is added and stirred at a rotation speed of 150 rpm for 30 min, and the temperature is raised to 75 °C under nitrogen protection and kept for 12 hours. After the reaction is ended, the reaction solution is filtered by suction through a qualitative filter paper in a Buchner funnel, washed with 500 mL deionized water for three times, and washed and filtered by suction with 300 mL ethanol for three times and with 300 mL acetone for three times, to obtain monodispersed non-porous crosslinked microspheres (PSDVB-Epoxy) having a degree of crosslinking of 70%. The particle size D50 is determined to be 5.1 μm by scanning electron microscopy (SEM). The epoxy value of the microspheres is 0.62 mmol/g.

**Example 6.** Synthesis of crosslinked polystyrene-divinylbenzene microspheres with epoxy groups on the surface thereof (PSDVB-Epoxy) having a degree of crosslinking of 80%

1.8 g sodium dodecylbenzene sulfonate (SDBS) is added to 600 g deionized water and completely dissolved by stirring to obtain mixed phase I (aqueous phase). 30.0 g 4-vinylbenzyl glycidyl ether (the monomer obtained in Example 2), 120.0 g divinyl benzene (DVB) and 3.75 g dicaprylyl peroxide as an initiator are added in a 500 mL beaker and completely dissolved by magnetic stirring to obtain mixed phase II (oil phase). The mixed phase I and the mixed phase II are added in a beaker and then ultrasonically emulsified into an emulsion of about 0.5 μm to 1 μm. 3.9 g PST seeds obtained in Example 3, the mixed phase I (aqueous phase) and the mixed phase II (oil phase) are added in a beaker, evenly mixed by magnetic stirring, and then swelled at room temperature under a controlled rotation speed of 100 rpm for 24 hours. Then, 243 g of a 2 % PVA solution is added and stirred at a rotation speed of 150 rpm for 30 min, and the temperature is raised to 75 °C under nitrogen protection and kept for 12 hours. After the reaction is ended, the reaction solution is filtered by suction through a qualitative filter paper in a Buchner funnel, washed with 500 mL deionized water for three times, and washed and filtered by suction with 300 mL ethanol for three times and with 300 mL acetone for three times, to obtain monodispersed non-porous crosslinked microspheres (PSDVB-Epoxy) having a degree of crosslinking of 80%. The particle size D50 is determined to be 5.25 μm by scanning electron microscopy (SEM). The epoxy value of the microspheres is 0.47 mmol/g.

**Example 7.** Synthesis of crosslinked polystyrene-divinylbenzene microspheres with epoxy groups on the surface thereof (PSDVB-Epoxy) having a degree of crosslinking of 50%

1.8 g sodium dodecylbenzene sulfonate (SDBS) is added to 600 g deionized water and completely dissolved by stirring to obtain mixed phase I (aqueous phase). 56.25 g 4-vinylbenzyl glycidyl ether (the monomer obtained in Example 2), 93.75 g divinyl benzene (DVB) and 3.75 g dicaprylyl peroxide as an initiator are added in a 500 mL beaker and completely dissolved by magnetic stirring to obtain mixed phase II (oil phase). The mixed phase I and the mixed phase II are added in a beaker and then ultrasonically emulsified into an emulsion of about 0.5 μm to 1 μm. 3.8 g PST seeds obtained in Example 3, the mixed phase I (aqueous phase) and the mixed phase II (oil phase) are added in a beaker, evenly mixed by magnetic stirring, and then swelled at room temperature under a controlled rotation speed of 100 rpm for 24 hours. Then, 243 g of a 2 % PVA solution is added and stirred at a rotation speed of 150 rpm for 30 min, and the temperature is raised to 75 °C under nitrogen protection and kept for 12 hours. After the reaction is ended, the reaction solution is filtered by suction through a qualitative filter paper in a Buchner funnel, washed with 500 mL deionized water for three times, and washed and filtered by suction with 300 mL ethanol for three times and with 300 mL acetone

for three times, to obtain monodispersed non-porous crosslinked microspheres (PSDVB-Epoxy) having a degree of crosslinking of 50%. The particle size D50 is determined to be 5.33 μm by scanning electron microscopy (SEM). The epoxy value of the microspheres is 0.79 mmol/g.

**Example 8.** Hydrophilic modification for PSDVB-OH microspheres

In a 500 mL three-neck flask, 50 mL PSDVB-Epoxy microspheres prepared in Example 4 is dispersed in 200 mL dioxane as a solvent, then 30 mL ethylene glycol and 30 g epichlorohydrin are added in the flask and evenly mixed, and then 2 mL boron trifluoride-diethyl etherate complex is added. The reaction solution is heated to 80 °C under nitrogen protection at a controlled rotation speed of 150 rpm to keep reaction for 8 hours. After cooling to room temperature, the reaction solution is washed and filtered by suction with deionized water (to pH 7.0) and with anhydrous ethanol. The residual epoxy value of the dried microspheres is ≤0.25 mmol/g.

**Example 9.** Preparation of crosslinked polystyrene-divinylbenzene microspheres with multiple epoxy groups on the surface thereof (PSDVB-mEpoxy) by using sorbitol tetraglycidyl ether as a polyepoxy compound

50 g PSDVB-OH prepared in Example 8 is added in a 250 mL three-neck flask, then 50.0 g NaOH solution (0.5 M) is added, stirred by a mechanical stirring device at 150 rpm at 40 °C for 1 hour, then 16 g sorbitol tetradiglycidyl ether (dissolved in 20 mL dioxane) and 2.0 g sodium cyanoborohydride are added and stirred at 150 rpm at 40 °C to keep reaction for 3 hours. After the reaction is ended, the reaction solution is washed with deionized water and filtered by suction until the filtrate is neutral (pH 7.0) to obtain microspheres with multiple epoxy groups. The epoxy value of the dried microspheres is 1.56 mmol/g.

**Example 10.** Preparation of crosslinked polystyrene-divinylbenzene microspheres with multiple epoxy groups on the surface thereof (PSDVB-mEpoxy) by using polyglycerol polyglycidyl ether as a polyepoxy compound

50 g PSDVB-OH prepared in Example 8 is added in a 250 mL three-neck flask, then 50.0 g NaOH solution (1.5 M, prepared by adding and dissolving 3.0 g NaOH in 50.04 g deionized water) is added, stirred by a mechanical stirring device at 150 rpm at 60°C for 1 hour, then 60 g polyglycerol polyglycidyl ether (dissolved in 60 mL dioxane) is added and stirred at 150 rpm at 60 °C to keep reaction for 3 hours. After the reaction is ended, the reaction solution is washed with deionized water and filtered by suction until the filtrate is neutral (pH 7.0), to obtain microspheres with multiple epoxy groups. The epoxy value of the dried PSDVB-mEpoxy microspheres is 1.68 mmol/g.

**Example 11.** Preparation of polycarboxy-enriched polystyrene-divinylbenzene microspheres (PSDVB-NTA) by using dicarboxylic acid structure amino acid carboxylation method with aspartic acid

30 mL PSDVB-mEpoxy microspheres prepared in Example 9 and 30 mL ultrapure water are added in a 50 mL three-neck round bottom flask. A solution consisting of 0.536 g NaOH, 15.2 mL $H_2O$, and 1.150 g aspartic acid is prepared in an ice-water bath, adjusted with $Na_2CO_3$ to pH=10, and added in the 50 mL three-neck round bottom flask. The solution is heated to 80 °C in a water bath under a water cooled condenser, kept for 4 hours, then cooled to room temperature, filtered with a suction funnel, washed with ultrapure water for ten times (30 mL each time), and finally washed once with a $Na_2CO_3$ solution having a mass ratio of 10 %, filtered and dried by suction with a funnel to obtain microspheres grafted with aspartic acid. 5.4 g bromoacetic acid is added to 20 mL NaOH solution (1.8 M) to prepare a solution. The solution is dropped in the flask at 30 °C under stirring at 300 rpm and kept stirring for 20 hours. The microspheres with the tricarboxylic acid structure are washed with deionized water for several times to be neutral, to obtain polycarboxy-enriched microspheres (PSDVB-NTA). The ion exchange capacity of the dried microspheres is 25 meg/L.

**Example 12.** Preparation of polycarboxy-enriched polystyrene-divinylbenzene microspheres (PSDVB-NTA) by using dicarboxylic acid structure amino acid carboxylation method with aspartic acid

30 mL PSDVB-mEpoxy microspheres prepared in Example 10 and 30 mL ultrapure water are added in a 50 mL three-neck round bottom flask. A solution consisting of 0.536 g NaOH, 15.2 mL $H_2O$, and 1.150 g aspartic acid is prepared in an ice-water bath, adjusted with $Na_2CO_3$ to pH=10, and added in the 50 mL three-neck round bottom flask. The solution is heated to 80 °C in a water bath under a water cooled condenser, kept for 4 hours, then cooled to room temperature, filtered with a suction funnel, washed with ultrapure water for ten times (30 mL each time), and finally washed once with a $Na_2CO_3$ solution having a mass ratio of 10 %, filtered and dried by suction with a funnel to obtain microspheres with aspartic acid. 5.4 g bromoacetic acid is added to 20 mL NaOH solution (1.8 M) to prepare a solution.

The solution is dropped in the flask at 30 °C under stirring at 300 rpm and kept stirring for 20 hours. The microspheres with the tricarboxylic acid structure are washed with deionized water for several times to be neutral, to obtain polycarboxy-enriched microspheres (PSDVB-NTA). The ion exchange capacity of the dried microspheres is 22 meg/L.

**Example 13.** Preparation of polycarboxy-enriched polystyrene-divinylbenzene microspheres (PSDVB-NTA) by lysine as active terminal amino acid

20 g PSDVB-mEpoxy microspheres prepared in Example 9 are dissolved in 20 mL sodium carbonate-sodium bicarbonate buffer (0.15 M) in a beaker to adjust the pH of the solution to be 8.5. 18.0 g lysine is dissolved in 20 mL dioxane and then added to the beaker. The system is stirred at 150 rpm at 50 °C for 16 hours, to obtain PSDVB-$\alpha$-amino carboxylic acid microspheres. 20 g PSDVB-$\alpha$-amino carboxylic acid microspheres are added in a flask. 20 mL NaOH solution (1.8 M) is added in the flask at 0 °C under stirring at 300 rpm. 5.4 g bromoacetic acid is added in 20 mL NaOH solution (1.8 M) to prepare a solution. The solution is dropped in the flask at 0 °C under stirring at 300 rpm, and kept for 2 hours. Then the system is stirred at 150 rpm at room temperature for 16 hours. The microspheres grafted with NTA are washed with deionized water for several times to be neutral, and then dried at 35 °C under vacuum to obtain polycarboxy-enriched microspheres (PSDVB-NTA). The ion exchange capacity of the dried microspheres is 20 meg/L.

**Example 14.** Preparation of polycarboxy-enriched polystyrene-divinylbenzene microspheres (PSDVB-NTA) by lysine as active terminal amino acid

20 g PSDVB-mEpoxy microspheres prepared in Example 10 are dissolved in 20 mL sodium carbonate-sodium bicarbonate buffer (0.15 M) in a beaker to adjust the pH of the solution to be 8.5. 18.0 g lysine is dissolved in 20 mL dioxane and then added to the beaker. The system is stirred at 150 rpm at 50 °C for 16 hours, to obtain PSDVB-$\alpha$-amino carboxylic acid microspheres. 20 g PSDVB-$\alpha$-amino carboxylic acid microspheres are added in a flask. 20 mL NaOH solution (1.8 M) is added in the flask at 0 °C under stirring at 300 rpm. 5.4 g bromoacetic acid is added in 20 mL NaOH solution (1.8 M) to prepare a solution. The solution is dropped in the flask at 0 °C under stirring at 300 rpm, and kept for 2 hours. Then the system is stirred at 150 rpm at room temperature for 16 hours. The microspheres grafted with NTA are washed with deionized water for several times to be neutral, and then dried at 35 °C under vacuum to obtain polycarboxy-enriched microspheres (PSDVB-NTA). The ion exchange capacity of the dried microspheres is 18 meg/L.

**Comparative Example 1.** Preparation of polycarboxy-enriched polystyrene-divinylbenzene microspheres (PSDVB-NTA) by using dicarboxylic acid structure amino acid carboxylation method with aspartic acid

30 mL PSDVB-Epoxy microspheres prepared in Example 4 and 30 mL ultrapure water are added in a 50 mL three-neck round bottom flask. A solution consisting of 0.536 g NaOH, 15.2 mL $H_2O$, and 1.150 g aspartic acid is prepared in an ice-water bath, adjusted with $Na_2CO_3$ to pH=10, and added in the 50 mL three-neck round bottom flask. The solution is heated to 80 °C in a water bath under a water cooled condenser, kept for 4 hours, then cooled to room temperature, filtered with a suction funnel, washed with ultrapure water for ten times (30 mL each time), and finally washed once with a $Na_2CO_3$ solution having a mass ratio of 10 %, filtered and dried by suction with a funnel to obtain microspheres grafted with aspartic acid. 5.4 g bromoacetic acid is added to 20 mL NaOH solution (1.8 M) to prepare a solution. The solution is dropped in the flask at 30 °C under stirring at 300 rpm and kept stirring for 20 hours. The microspheres with the tricarboxylic acid structure are washed with deionized water for several times to be neutral, to obtain polycarboxy-enriched microspheres (PSDVB-NTA). The ion exchange capacity of the dried microspheres is 5.6 meg/L.

**Comparative Example 2.** Preparation of polycarboxy-enriched polystyrene-divinylbenzene microspheres (PSDVB-NTA) by lysine as active terminal amino acid

20 g PSDVB-Epoxy microspheres prepared in Example 4 are dissolved in 20 mL sodium carbonate-sodium bicarbonate buffer (0.15 M) in a beaker to adjust the pH of the solution to be 8.5. 18.0 g lysine is dissolved in 20 mL dioxane and then added to the beaker. The system is stirred at 150 rpm at 50 °C for 16 hours, to obtain PSDVB-$\alpha$-amino carboxylic acid microspheres. 20 g PSDVB-$\alpha$-amino carboxylic acid microspheres are added in a flask. 20 mL NaOH solution (1.8 M) is added in the flask at 0 °C under stirring at 300 rpm. 5.4 g bromoacetic acid is added in 20 mL NaOH solution (1.8 M) to prepare a solution. The solution is dropped in the flask at 0 °C under stirring at 300 rpm, and kept for 2 hours. Then the system is stirred at 150 rpm at room temperature for 16 hours. The microspheres grafted with NTA are washed with deionized water for several times to be neutral, and then dried at 35 °C under vacuum to obtain polycarboxy-enriched microspheres (PSDVB-NTA). The ion exchange capacity of the dried microspheres is 4.3 meg/L.

**Test Example 1. Compressive resistance test of microspheres**

The test is performed as follows. The polystyrene-divinylbenzene microspheres (PSDVB-Epoxy) prepared in Examples 4 to 7 are separately homogenized with ethanol and packed to form a 4.0 mm (inner diameter) × 30 mm (length) chromatographic column. Compressive resistance test of the microspheres in each chromatographic column is performed using a high-performance liquid chromatograph (Agilent 1260 Infinity II HPLC). 50mM PB buffer solution (pH 6.0) is used as the eluent, and the flow rate is gradually increased from 0.5 mL/min to 5.00 mL/min at a step length of 0.25 mL/min. Each flow rate is maintained for 3 min, and the column temperature is 25 °C. The column pressure of each chromatographic column is measured, and the detection data in a certain flow rate range is linearly fitted. The results are shown in Tables 1 and 2, and FIG. 5. The column pressures of the PSDVB-Epoxy microspheres prepared in Examples 4 to 7 at a flow rate of 0.5 mL/min to 5.25 mL/min are shown in Table 1. The curve fitting equations of the flow rate versus the column pressure for the chromatographic columns made of the PSDVB-Epoxy microspheres prepared in Examples 4 to 7 in the corresponding flow rate range are shown in Table 2, where Y is the column pressure and x is the flow rate. The fitted curves of the flow rate versus the column pressure for the chromatographic columns made of the PSDVB-Epoxy microspheres prepared in Examples 4 to 7 in the flow rate range of 0.5 mL/min to 5.25 mL/min are shown in FIG. 5.

**Table 1**

| Flow rate (mL/min) | Column pressure of Example 4 (MPa) | Column pressure of Example 5 (MPa) | Column pressure of Example 6 (MPa) | Column pressure of Example 7 (MPa) |
|---|---|---|---|---|
| 0.5 | 2.1 | 2.2 | 2.1 | 2.1 |
| 1 | 4.1 | 4.3 | 4.2 | 4.1 |
| 1.5 | 6 | 6.4 | 6.5 | 6 |
| 2 | 8 | 8.7 | 8.8 | 8.5 |
| 2.5 | 10.3 | 11.1 | 11.1 | 11.3 |
| 3 | 12.8 | 13.7 | 13.5 | 14.8 |
| 3.25 | 14 | 15.1 | 14.7 | 16.5 |
| 3.5 | 15.4 | 16.5 | 16.1 | 18.2 |
| 3.75 | 16.8 | 17.9 | 17.4 | 19.7 |
| 4 | 18.2 | 19.5 | 18.6 | 21.2 |
| 4.25 | 19.6 | 21 | 19.8 | 23.3 |
| 4.5 | 21.1 | 22.6 | 21.1 | 25.5 |
| 4.75 | 22.7 | 24.5 | 22.3 | 29.1 |
| 5 | 24.4 | 26.4 | 23.8 | 33.9 |
| 5.25 | 26 | 29 | 25 | 40.5 |

**Table 2**

| | Flow rate range | Curve fitting equation | Correlation ($R^2$) | Epoxy value of PSDVB-Epoxy microspheres (mmol/g) |
|---|---|---|---|---|
| Example 4 | 0.5mL/min to 4.5mL/min | Y=4.5727x-1.0002 | 0.9944 | 0.65 |
| Example 5 | 0.5mL/min to 4.5mL/min | Y=5.0991x-1.0912 | 0.9822 | 0.62 |
| Example 6 | 0.5mL/min to 5.25mL/min | Y=4.8539x-0.7751 | 0.9991 | 0.47 |
| Example 7 | 0.5mL/min to 2.5mL/min | Y=4.56x-0.44 | 0.9928 | 0.79 |

It should be noted that the higher the compressive resistance of the PSDVB-Epoxy, the higher the compressive strength of the PSDVB-mEpoxy and the PSDVB-NTA formed therefrom. Compared with PSDVB-Epoxy microspheres, the multiple epoxy and NTA groups have smaller molecular weights, and thus the effects of the grafting of the multiple epoxy groups and the NTA groups on the particle size and the compressive resistance of the microspheres are substantially negligible.

It can be seen from Tables 1 and 2, and FIG. 5 that the chromatographic column of Example 4 has a good correlation between the column pressure and the flow rate in the flow rate range of 0.5 mL/min to 4.5 mL/min ($R^2$=0.9944), and the linearity is good, indicating that the PSDVB-Epoxy microspheres prepared in Example 4 can withstand a pressure of 21.1 MPa, and the PSDVB-NTA microspheres made from the PSDVB-Epoxy microspheres prepared in Example 4 can withstand a pressure of 21.1 MPa or more, having excellent compressive resistance. The compressive resistance of the PSDVB-Epoxy microspheres prepared in Example 5 is similar to that of the PSDVB-Epoxy microspheres prepared in Example 4. The chromatographic column of Example 6 has a good correlation between the column pressure and the flow rate in the flow rate range of 0.5 mL/min to 5.25 mL/min ($R^2$=0.9991), indicating that the PSDVB-Epoxy microspheres prepared in Example 6 can withstand a pressure of 25 MPa, and the PSDVB-NTA microspheres made from the PSDVB-Epoxy microspheres prepared in Example 6 can withstand a pressure of 25 MPa or more, having excellent compressive resistance. The chromatographic column of Example 7 has a certain correlation between the column pressure and the flow rate in the flow rate range of 0.5 mL/min to 2.5 mL/min, indicating that the PSDVB-Epoxy microspheres of Example 7 can withstand a pressure of 10 MPa, and the PSDVB-NTA microspheres made from the PSDVB-Epoxy microspheres prepared in Example 7 can withstand a pressure of 10 MPa. Therefore, the compressive resistance of the PSDVB-Epoxy prepared in Example 4 is slightly lower than that of Example 6, but much higher than that of Example 7.

Furthermore, the higher the epoxy value of the PSDVB-Epoxy microspheres, the more active groups to be grafted thereto. The epoxy values of the PSDVB-Epoxy prepared in Example 4 and Example 5 are substantially comparable. The epoxy values of the PSDVB-Epoxy prepared in Example 4 and Example 5 are higher than that of Example 6 and slightly lower than that of Example 7.

In conclusion, it can be seen from the results of Test Example 1 that the higher the degree of crosslinking of the PSDVB-Epoxy microspheres, the higher the compressive resistance of the PSDVB-Epoxy microspheres, and the lower the epoxy value of the PSDVB-Epoxy microspheres, with less active groups to be grafted. The PSDVB-Epoxy microspheres prepared in Example 4 are selected for subsequent tests in order to have both a high compressive resistance and a high epoxy value of the PSDVB-Epoxy microspheres.

**Test Example 2.** Non-specific adsorption

1. A 4.0 mm × 150 mm chromatographic column is made of the packing. The column loading solvent is ultrapure water at pH 7.0. There are three chromatographic columns: a first chromatographic column (hereinafter referred to as column No. 1) is packed with hydrolyzed PSDVB-Epoxy microspheres of Example 4; a second chromatographic column (hereinafter referred to as column No. 2) is packed with hydrolyzed crosslinked polystyrene-divinylbenzene microspheres with multiple epoxy groups (PSDVB-mEpoxy) of Example 9; a third chromatographic column (hereinafter referred to as column No. 3) is packed with the polycarboxyl-enriched polystyrene-divinylbenzene microspheres (PSDVB-NTA) prepared in Example 11.

2. Test Method

0.25 mg/mL Bovine serum albumin (BSA) is used as the test sample. The test sample is detected with the above chromatographic columns respectively using a high-performance liquid chromatograph (Agilent 1260 Infinity II HPLC) with the following conditions: The mobile phase is 10 mM phosphate buffer (0.5 M NaCl, pH 7.0), the flow rate is 0.5 mL/min, the UV detection is at 214 nm, the column temperature is room temperature, and the injection volume is 2 μL/injection of the test sample. The test sample is injected to each column continuously for 20 times, i.e., 20 injections.

3. Plotting curves

The scatter graph is plotted with the number of sample injection as the abscissa and the BSA peak area as the ordinate.

4. Calculation of non-specific adsorption amount

The recovery rate of BSA is regarded as 100 % in the $20^{th}$ sample injection, and the recovery rate of BSA being

less than 98 % is regarded as indication of non-specific adsorption existence. The non-specific adsorption amount of BSA (in μg/mL) is calculated by the following Equation (1):

$$\text{Non-specific adsorption amount of BSA} = (2N\times0.25)/(0.20^2\times\pi\times15) \qquad (1)$$

where N is the maximum number of sample injections when the recovery rate of BSA is less than 98 %.

The non-specific adsorption amount of BSA for each chromatographic column is calculated by Equation (1), and the results are shown in Table 3 and FIGS. 6 to 8. The peak area statistics obtained by using column No. 1 for the twenty sample injections in Test Example 2 are shown in FIG. 6. The peak area statistics obtained by using column No. 2 for the twenty sample injections in Test Example 2 are shown in FIG. 7. The peak area statistics obtained by using column No. 3 for the twenty sample injections in Test Example 2 are shown in FIG. 8

**Table 3.** N and the non-specific adsorption amount of BSA for each column

| | Column No. 1 | Column No. 2 | Column No. 3 |
|---|---|---|---|
| N (times) | 9 | 2 | 5 |
| Non-specific adsorption amount of BSA (μg/mL) | 2.39 | 0.53 | 1.33 |

It can be seen from Table 3 and FIGS. 6 to 8 that the non-specific adsorption amounts of column No. 2 and column No. 3 are both smaller than that of column No. 1, indicating that the non-specific adsorption amounts of the PSDVB-mEpoxy microspheres prepared in Example 9 and the polycarboxyl-enriched polystyrene-divinylbenzene microspheres prepared in Example 11 are both smaller than that of the PSDVB-Epoxy microspheres prepared in Example 4, and further indicating that the non-specific adsorption of the microspheres can be reduced by modifying the surface of the microspheres with hydrophilic glycidyl ether, thereby improving the chromatographic column service life and ensuring the separation effect of the target protein.

**Test Example 3**

The polycarboxyl-enriched polystyrene-divinylbenzene microspheres (PSDVB-NTA) prepared in Examples 11 to 14 and Comparative Examples 1 to 2 are used as chromatographic column packing respectively. After homogenized with ultrapure water, the packing is loaded through a high-pressure pneumatic pump into a 4.6 × 30 mm chromatographic column with a volume of 0.498 mL. A separation performance test for standard protein cytochrome c and lysozyme is carried out using the high-performance liquid chromatograph (Agilent 1260 Infinity II HPLC) under the following conditions: the flow rate is 1.5 mL/min, the injection volume is 2 μL, the test is carried out at room temperature, the eluent used for gradient elution includes buffer A (50 mmol phosphate buffer at pH 6.0) and buffer B (buffer A and 1 M NaCl at pH 6.0). Gradient elution: 0 min 100 % (v/v) buffer A, 10 min 25 % (v/v) buffer A and 75 % (v/v) buffer B. The UV detection is at a wavelength of 214 nm. In the gradient elution, the proportions of buffer A and buffer B are changed from 100 % (v/v) buffer A and 0 % (v/v) buffer B to 25 % (v/v) buffer A and 75 % (v/v) buffer B from 0 min to 10 min. The results are shown in Table 4 and FIGS. 9 to 14. The resolution in Table 4 refers to the resolution between the chromatographic peaks of lysozyme and cytochrome c. The chromatogram achieved by using PSDVB-NTA microspheres prepared in Example 11 as the chromatographic column packing in Test Example 3 is shown in FIG. 9. The chromatogram achieved by using PSDVB-NTA microspheres prepared in Example 12 as the chromatographic column packing in Test Example 3 is shown in FIG. 10. The chromatogram achieved by using PSDVB-NTA microspheres prepared in Example 13 as the chromatographic column packing in Test Example 3 is shown in FIG. 11. The chromatogram achieved by using PSDVB-NTA microspheres prepared in Example 14 as the chromatographic column packing in Test Example 3 is shown in FIG. 12. The chromatogram achieved by using PSDVB-NTA microspheres prepared in Comparative Example 1 as the chromatographic column packing in Test Example 3 is shown in FIG. 13. The chromatogram achieved by using PSDVB-NTA microspheres prepared in Comparative Example 2 as the chromatographic column packing in Test Example 3 is shown in FIG. 14.

**Table 4.** Test results of chromatographic columns of Examples 11 to 14 and Comparative Examples 1 to 2

| Packing | Ion exchange capacity (meg/L) | Cytochrome c | | Lysozyme | | Resolution |
|---|---|---|---|---|---|---|
| | | Retention time (min) | Column efficiency | Retention time (min) | Column efficiency | |
| Example 11 | 25 | 3.707 | 22568 | 5.400 | 26749 | 14.681 |
| Example 12 | 22 | 3.768 | 23575 | 5.372 | 28045 | 14.195 |
| Example 13 | 20 | 3.728 | 20234 | 5.446 | 21738 | 13.625 |
| Example 14 | 18 | 3.746 | 21286 | 5.455 | 22307 | 13.769 |
| Comparative Example 1 | 5.6 | 0.911 | 553 | 2.062 | 559 | 4.56 |
| Comparative Example 2 | 4.3 | 1.133 | 469 | 2.906 | 491 | 4.82 |

As can be seen from Table 4 and FIGS. 9 to 12, each chromatographic column of Examples 11 to 14 has a good separation effect on lysozyme and cytochrome c. Both the column efficiency and resolution of the chromatographic peak of lysozyme and the chromatographic peak of cytochrome c of Examples 11 and 12 are higher than those of Examples 13 and 14, indicating that it is more effective to improve the column efficiency and resolution of protein separation by an ion exchange chromatographic column packed with polycarboxyl-enriched polystyrene-divinylbenzene microspheres prepared from aspartic acid. The chromatographic columns of Comparative Examples 1 to 2 have relatively short retention time, low column efficiency, and low resolution for lysozyme and cytochrome c, the separation effects of which are significantly different from those of the chromatographic columns of Examples 11 to 14.

**Test Example 4**

The polycarboxyl-enriched polystyrene-divinylbenzene microspheres (PSDVB-NTA) prepared in Example 11 are used as chromatographic column packing. The glycosylated hemoglobin and variant hemoglobin analysis is performed on blood samples using a H9 glycosylated hemoglobin analyzer from Shenzhen Lifotronic Technology Co., Ltd. (Guangdong medical device registration no. 20152401315), operating in the glycosylated hemoglobin mode. A succinic acid buffer is used as the eluent, and the buffer is from a glycosylated hemoglobin (HbAlc) assay kit for high-performance liquid chromatography (Guangdong medical device registration no. 20152401314). Glycosylated hemoglobin quality control material (Guangdong medical device registration no. 20162400488) and calibration material (Guangdong medical device registration no. 20162400487) from Shenzhen Lifotronic Technology Co., Ltd. are used. Quantitative analysis of glycosylated hemoglobin and identification of common variants are performed according to the standard operating procedure of the H9 glycosylated hemoglobin analyzer in the 130 seconds mode with the following conditions: the flow rate is 1.5mL/min, the column temperature is 40 °C, the UV detection is at a wavelength of 415 nm, and the isocratic elution conditions are: 50s (phase A)-30s (phase C)-50s (phase B) in 130 seconds analysis time, which means that the isocratic elution is performed with phase A for 50 seconds, with phase C for 30 seconds, and with phase B for 50 seconds in sequence. The following similar description can be understood in an analogous manner and will not be repeated. The quality control material is tested according to the same test conditions.

The blood sample under test is a whole blood sample, and the mass percentage of HbAlc in the whole blood sample is known to be 7.6%. The quality control material includes a low-value quality control material (the mass percentage of HbAlc is 5.3%) and a high-value quality control material (the mass percentage of HbA1c is 9.9%). The results are shown in Table 5 and FIG. 15. The test result statistics of Test Example 4 are shown in Table 5, and "%" in Table 5 indicates the mass percentage. The liquid chromatograms of the sample under test and the quality control material in Test Example 4 are shown in FIG. 15. In Table 5, HbA1c-NGSP= 0.9148 HbA1c-IFCC+2.152, NGSP refers to the National Glycohemoglobin Standardization Program of the United States; HbA1c-IFCC=(10.93×HbA1c-NGSP)-23.50, IFCC refers to the International Federation of Clinical Chemistry and Laboratory Medicine; and average glucose concentration eAG (mmol/L)=1.59×HbA1c-NGSP-2.59.

**Table 5**

| | Low-value quality control material (5.3%) | | Whole blood sample (7.6%) | | High-value quality control material (9.9%) | |
|---|---|---|---|---|---|---|
| | Retention time (s) | Content (%) | Retention time (s) | Content (%) | Retention time (s) | Content (%) |
| HbA1a | 15.4 | 1.5 | 15.4 | 1.4 | 15.4 | 1.5 |
| HbA1b | 21.4 | 0.5 | 21.4 | 0.9 | 21.4 | 0.8 |
| HbF | 30.6 | 0.5 | 30.6 | 1.0 | 30.6 | 0.7 |
| LA1c | 44.0 | 0.3 | 44.0 | 0.4 | 44.0 | 0.4 |
| HbA1c | 51.1 | 5.1 | 51.1 | 7.6 | 50.7 | 10.1 |
| HbA0 | 80.6 | 92.6 | 80.8 | 89.5 | 80.3 | 87.4 |
| V_Win | 0.0 | 0 | 0.0 | 0 | 0.0 | 0 |
| eAG | 5.58267 mmol/l | | 9.42348 mmol/l | | 13.4691 mmol/l | |
| IFCC | 32.6782 mmol/mol | | 59.0783 mmol/mol | | 86.886 mmol/mol | |
| Total peak area | 70505.3 | | 89869 | | 74248.2 | |

It can be seen from Table 5 and FIG. 15 that the polycarboxyl-enriched polystyrene-divinylbenzene microspheres (PSDVB-NTA) prepared in Example 11 can be used as chromatographic column packing to separate and quantitatively detect glycosylated hemoglobin in a whole blood sample, and also to separate and quantitatively detect non-glycosylated hemoglobins such as HbA0, HbA2, HbF, etc. in a whole blood sample.

**Test Example 5**

The polycarboxyl-enriched polystyrene-divinylbenzene microspheres (PSDVB-NTA) prepared in Example 11 are used as chromatographic column packing. The glycosylated hemoglobin and variant hemoglobin analysis is performed on blood samples using the H9 glycosylated hemoglobin analyzer from Shenzhen Lifotronic Technology Co., Ltd. (Guangdong medical device registration no. 20152401315), operating in the glycosylated hemoglobin mode. The specific test conditions are the same as those in Test Example 4. See the above for details, which are not described here.

There are four blood samples under test, namely, Samples 1 to 4. Sample 1 is a whole blood sample including variant HbE, Sample 2 is a whole blood sample including variant HbD, Sample 3 is a whole blood sample including variant HbS, and Sample 4 is a whole blood sample including variant HbC. The results are shown in Table 6 and FIG. 16. The test result statistics of Test Example 5 are shown in Table 6. The liquid chromatograms of the samples under test in Test Example 5 are shown in FIG. 16. In FIG. 16, E refers to HbE, D refers to HbD, S refers to HbS, and C refers to HbC.

**Table 6**

| | Variant HbE | Variant HbD | Variant HbS | Variant HbC |
|---|---|---|---|---|
| Retention time (seconds) | 87.0 | 95.2 | 96.2 | 98.4 |

It can be seen from Table 6 and FIG. 16 that the polycarboxyl-enriched polystyrene-divinylbenzene microspheres (PSDVB-NTA) prepared in Example 11, as chromatographic column packing, can also be able to identify and detect variants such as HbE, HbD, HbS, and HbC in the samples under test, where the peaks of HbD and HbS are relatively close.

**Test Example 6.** Repeatability

The polycarboxyl-enriched polystyrene-divinylbenzene microspheres (PSDVB-NTA) prepared in Example 11 are used as chromatographic column packing. Tests for mass percentage contents of glycosylated hemoglobin (HbAlc) are performed on blood samples using the H9 glycosylated hemoglobin analyzer from Shenzhen Lifotronic Technology

Co., Ltd. (Guangdong medical device registration no. 20152401315), operating in the glycosylated hemoglobin mode. The specific test conditions are the same as those in Test Example 4. See the above for details, which are not described here. The results are shown in Table 7 and FIG. 17. The test result statistics of Test Example 6 are shown in Table 7. The repeatability test results in Test Example 6 are shown in FIG. 17.

There are three blood samples under test, namely, Samples 1 to 3. Sample 1 is a clinical whole blood sample and the mass percentage content of HbAlc is 5% to 7%; Sample 2 is a clinical whole blood sample and the mass percentage content of HbAlc is 7% to 9%; and Sample 3 is a clinical whole blood sample and the mass percentage of HbAlc is 9% to 12%. Each of the three blood samples is repeatedly tested for 20 times, and the mean (M) and the standard deviation (SD) of the twenty test results of each sample are calculated. The coefficient of variation (CV) is obtained according to the following equation.

$$CV = \frac{SD}{M} \times 100\%$$

where CV refers to coefficient of variation; SD refers to standard deviation of the twenty test results; and M refers to mean of the twenty test results.

**Table 7**

| No. | Sample 1 | Sample 2 | Sample 3 |
|---|---|---|---|
| 1 | 6.6% | 8.2% | 9.1% |
| 2 | 6.6% | 8.2% | 9.1% |
| 3 | 6.6% | 8.2% | 9.1% |
| 4 | 6.6% | 8.2% | 9.1% |
| 5 | 6.6% | 8.2% | 9.1% |
| 6 | 6.6% | 8.2% | 9.1% |
| 7 | 6.6% | 8.2% | 9.1% |
| 8 | 6.7% | 8.2% | 9.0% |
| 9 | 6.7% | 8.2% | 9.1% |
| 10 | 6.6% | 8.3% | 9.2% |
| 11 | 6.6% | 8.2% | 9.0% |
| 12 | 6.5% | 8.3% | 9.2% |
| 13 | 6.6% | 8.2% | 9.2% |
| 14 | 6.5% | 8.2% | 9.1% |
| 15 | 6.6% | 8.3% | 9.2% |
| 16 | 6.7% | 8.2% | 9.1% |
| 17 | 6.6% | 8.2% | 9.1% |
| 18 | 6.5% | 8.2% | 9.2% |
| 19 | 6.6% | 8.2% | 9.1% |
| 20 | 6.5% | 8.2% | 9.1% |
| M | 6.6% | 8.2% | 9.1% |
| SD | 0.0605% | 0.0366% | 0.0587% |
| CV | 0.92% | 0.45% | 0.64% |

Generally, the coefficient of variation (CV) for the repeated measurements of samples with different concentrations should not be greater than 3.0 %. It can be seen from Table 7 and FIG. 17 that by using the polycarboxyl-enriched polystyrene-divinylbenzene microspheres (PSDVB-NTA) prepared in Example 11 as the chromatographic

column packing, CV for Sample 1 is 0.92%, CV for Sample 2 is 0.45%, and CV for Sample 3 is 0.64%, indicating that the polycarboxyl-enriched polystyrene-divinylbenzene microspheres (PSDVB-NTA) prepared in Example 11, as the chromatographic column packing can provide good repeatability for the tests to meet the repeatability requirements.

**Test Example 7.** Correlation of clinical samples

The polycarboxyl-enriched polystyrene-divinylbenzene microspheres (PSDVB-NTA) prepared in Example 11 are used as chromatographic column packing. Tests for mass percentage contents of glycosylated hemoglobin (HbAlc) are performed on blood samples using the H9 glycosylated hemoglobin analyzer from Shenzhen Lifotronic Technology Co., Ltd. (Guangdong medical device registration no. 20152401315), operating in the glycosylated hemoglobin mode. The specific test conditions are the same as those in Test Example 4. See the above for details, which are not described here.

Comparative Test Example: Tests for mass percentage contents of glycosylated hemoglobin (HA, HbA1c) are performed on the same blood samples using an automatic glycohemoglobin analyzer HLC-723G8 and an associated glycosylated hemoglobin assay kit for high-performance liquid chromatography from Tosoh Corp., according to the operating instructions of the kit.

The blood samples under test are 40 clinical samples, including 12 samples from normal physical examination and 28 samples from diabetics. The results are shown in Table 8 and FIG. 18. The test result statistics of Test Example 7 are shown in Table 8. In Table 8, the relative deviation of the test results in the present invention from the test results in Test Comparative Example on the same test sample is shown. The test results in the present invention are obtained by using the polycarboxyl-enriched polystyrene-divinylbenzene microspheres (PSDVB-NTA) prepared in Example 11 as the chromatographic column packing. The correlation test results in Test Example 7 are shown in FIG. 18.

**Table 8**

| No. | Comparative test Example (%) | The present invention (%) | Relative deviation |
|---|---|---|---|
| 1 | 5.9 | 5.9 | 0.0% |
| 2 | 4.8 | 4.9 | 2.1% |
| 3 | 5.4 | 5.3 | -1.9% |
| 4 | 7.3 | 7.2 | -1.4% |
| 5 | 8.0 | 8.0 | 0.0% |
| 6 | 9.1 | 9.0 | -1.1% |
| 7 | 10.3 | 10.1 | -1.9% |
| 8 | 4.8 | 5.0 | 4.2% |
| 9 | 5.2 | 5.3 | 1.9% |
| 10 | 5.6 | 5.7 | 1.8% |
| 11 | 7.2 | 7.2 | 0.0% |
| 12 | 8.2 | 8.0 | -2.4% |
| 13 | 9.4 | 9.1 | -3.2% |
| 14 | 10.2 | 10.0 | -2.0% |
| 15 | 5.8 | 5.8 | 0.0% |
| 16 | 4.7 | 4.8 | 2.1% |
| 17 | 5.5 | 5.7 | 3.6% |
| 18 | 7.2 | 7.3 | 1.4% |
| 19 | 8.5 | 8.5 | 0.0% |
| 20 | 9.2 | 9.2 | 0.0% |
| 21 | 10.3 | 10.4 | 1.0% |
| 22 | 5.5 | 5.6 | 1.8% |

(continued)

| No. | Comparative test Example (%) | The present invention (%) | Relative deviation |
|---|---|---|---|
| 23 | 4.8 | 4.8 | 0.0% |
| 24 | 5.3 | 5.3 | 0.0% |
| 25 | 7.1 | 7.1 | 0.0% |
| 26 | 8.4 | 8.3 | -1.2% |
| 27 | 9.3 | 9.1 | -2.2% |
| 28 | 10.5 | 10.1 | -3.8% |
| 29 | 11.7 | 11.3 | -3.4% |
| 30 | 13.8 | 13.1 | -5.1% |
| 31 | 11.8 | 11.3 | -4.2% |
| 32 | 11.6 | 11.2 | -3.4% |
| 33 | 11.8 | 11.5 | -2.5% |
| 34 | 13.6 | 13.0 | -4.4% |
| 35 | 11.5 | 11.4 | -0.9% |
| 36 | 11.8 | 11.8 | 0.0% |
| 37 | 13.5 | 13.2 | -2.2% |
| 38 | 12.0 | 11.8 | -1.7% |
| 39 | 11.4 | 11.1 | -2.6% |
| 40 | 13.4 | 13.1 | -2.2% |
| Consistency rate | / | / | 100% |
| Acceptable criteria | Proportion of relative deviations within ±6% ≥90%, $R^2$≥0.99 | | |
| Conclusion | Consistent | | |

Generally, the correlation $R^2$ of the test results should not be lower than 0.99, and 90% outcomes of relative deviation between the estimated values and the target values should be within ±6%. It can be seen from Table 8 and FIG. 18 that the outcomes of relative deviation between the test results obtained by using the chromatographic system of the present invention and the test results obtained by using the chromatographic system of Tosoh Corp. are all within ±6%, and the correlation $R^2$ is 0.9978, which can meet the requirements.

**Test Example 8.** Interday stability and lifetime of chromatographic column

The polycarboxyl-enriched polystyrene-divinylbenzene microspheres (PSDVB-NTA) prepared in Example 11 are used as chromatographic column packing. Tests for mass percentage contents of glycosylated hemoglobin (HbAlc) are performed on whole blood samples from diabetics using the H9 glycosylated hemoglobin analyzer from Shenzhen Lifotronic Technology Co., Ltd. (Guangdong medical device registration no. 20152401315), operating in the glycosylated hemoglobin mode. The specific test conditions are the same as those in Test Example 4. See the above for details, which are not described here. The analyzer is powered on and off every day to test the quality control materials, about 600 times (T) per day for about 5 days. The coefficient of variation of the interday test results of the quality control materials is calculated within the chromatographic column lifetime range, i.e., 3000 times (T), based upon the test results recorded once every 150 times (T). The coefficient of variation of the test results of the quality control material should be less than 3%, i.e., CV<3%, and the peak profile should not be widened, trailed, or appear a shoulder peak. The quality control materials are a low-value quality control material (the mass percentage of HbAlc is 5.3%) and a high-value quality control material (the mass percentage of HbAlc is 9.9%). The results are shown in Table 9 and FIG. 19. The test result statistics of Test Example 8 are shown in Table 8. The quality control graph of Test Example 8 is shown in FIG. 19.

**Table 9**

| Cumulative number of tests | Low-value quality control material | | High-value quality control material | |
|---|---|---|---|---|
| | Retention time (s) | HbA1content (%) | Retention time (s) | HbA1content (%) |
| 1 | 40 | 5.4 | 40 | 10.0 |
| 150 | 40 | 5.3 | 40 | 9.9 |
| 300 | 39 | 5.3 | 39 | 9.8 |
| 450 | 39 | 5.4 | 39 | 10.1 |
| 600 | 39 | 5.4 | 39 | 10.1 |
| 750 | 39 | 5.4 | 39 | 10.1 |
| 900 | 39 | 5.6 | 39 | 10.2 |
| 1050 | 39 | 5.4 | 39 | 10.0 |
| 1200 | 39 | 5.6 | 39 | 10.1 |
| 1350 | 39 | 5.3 | 39 | 9.9 |
| 1500 | 39 | 5.4 | 39 | 10.0 |
| 1650 | 39 | 5.6 | 39 | 10.0 |
| 1800 | 39 | 5.4 | 39 | 10.0 |
| 1950 | 39 | 5.4 | 39 | 10.1 |
| 2100 | 39 | 5.4 | 39 | 10.1 |
| 2250 | 39 | 5.4 | 39 | 10.0 |
| 2400 | 39 | 5.4 | 39 | 10.2 |
| 2550 | 37 | 5.1 | 37 | 9.7 |
| 2700 | 37 | 5.1 | 38 | 10.0 |
| 2850 | 38 | 5.0 | 38 | 9.9 |
| 3000 | 38 | 5.2 | 37 | 9.7 |
| Quality control CV | 2.9% | | 1.4% | |

As can be seen from Table 9 and FIG. 19, the peak profiles for the quality control materials are normal after the 3000T tests with the same chromatographic column, the retention time is stable, and the quality control CV is less than 3%, indicating that the PSDVB-NTA microspheres of the present invention can be used to prepare chromatographic columns with high interday stability and long lifetime.

**Test Example 9**

The polycarboxyl-enriched polystyrene-divinylbenzene microspheres (PSDVB-NTA) prepared in Example 11 are used as chromatographic column packing. The variant hemoglobin analysis is performed on blood samples using the H9 glycosylated hemoglobin analyzer from Shenzhen Lifotronic Technology Co., Ltd., operating in the thalassemia mode. The conditions are as follows: A succinic acid buffer solution is used as the eluent, whose flow rate is 1.5mL/min, the column temperature is 30 °C, the UV detection is at a wavelength of 415 nm, the analysis time is 380s, 7 μL of the whole blood sample is diluted with 1.5 mL ultrapure water, the injection volume is 5 μL, and the isocratic elution conditions are: 60s (phase A2)-50s (phase B2)-50s (phase A2)-40s (phase B2)-140s (phase C2)-40s (phase A2). Phase A2 is 45 mM of the succinic acid buffer (pH 5.4), phase B2 is 100 mM of the succinic acid buffer (pH5.4), and phase C2 is 530 mM of the succinic acid buffer (pH5.4). The blood samples under test are Samples 1 to 8. Sample 1 is a whole blood sample containing HbA2, Sample 2 is a whole blood sample containing HbE, Sample 3 is a whole blood sample containing HbD, Sample 4 is a whole blood sample containing HbS, Sample 5 is a whole blood sample containing HbC, Sample 6 is a whole blood sample containing HbJ-Bangkok, Sample 7 is a whole blood sample containing Hb G-Taipei, and Sample 8 is a whole blood sample containing Hb Q-Thailand. The results are shown in Tables 10 to 11, and FIGS. 20 to 23. The retention time ranges of conventional hemoglobins are shown in Table 10. The retention times of the variant

hemoglobins in Samples 1 to 8 are shown in Table 11. The detection chromatograms of Samples 1 to 5 in Test Example 9 are shown in FIG. 20. The detection chromatogram of Sample 6, i.e., the whole blood sample containing HbJ-Bangkok, in Test Example 9 is shown in FIG. 21. The detection chromatogram of Sample 7, i.e., the whole blood sample containing Hb G-Taipei, in Test Example 9 is shown in FIG. 22. The detection chromatogram of Sample 8, i.e., the whole blood sample containing Hb Q-Thailand, is shown in FIG. 23.

**Table 10**

| Chromatographic peak | Retention time and peak range (s) |
|---|---|
| HbA1a | 13.8 (12.0-15.0) |
| HbA1b | 21.0 (17.0-20.0) |
| HbF | 30.1 (27.0-34.0) |
| LA1c | 38.8 (36.0-40.0) |
| HbA1c | 54.3 (50.0-58.0) |
| P3 | 82.0 (78.0-89.0) |
| P4 | 100.7 (95.0-110.0) |
| HbA0 | 125.9 (120.0-135.0) |

**Table 11**

| Chromatographic peak | Retention time (s) |
|---|---|
| HbA2 | 186.0 |
| HbE | 230.7 |
| HbD | 245.3 |
| HbS | 270.5 |
| HbC | 310.7 |
| HbJ-Bangkok | 105.3 |
| Hb G-Taipei | 226.8 |
| Hb Q-Thailand | 299.7 |

As can be seen from Table 10 and FIG. 20, the PSDVB-NTA ion exchange packing microspheres of the present invention can separate 13 types of hemoglobins such as HbA1a, HbA1b, LA1c, HbF, HbA1c, P3, P4, HbA0, HbA2, HbE, HbD, HbS, and HbC. It can be seen from Table 11 and FIGS. 21 to 23 that the PSDVB-NTA ion exchange packing microspheres of the present invention can also separate and detect hemoglobin variants such as HbJ-Bangkok, Hb G-Taipei, and Hb Q-Thailand, which are common in China.

In summary, the PSDVB-NTA ion-exchange packing microspheres of the present invention can separate and quantify glycosylated hemoglobins in up to 130 seconds and also can identify hemoglobin variants. The microspheres of the present invention can separate 16 types of hemoglobins including glycosylated hemoglobins and various hemoglobin variants in up to 380 seconds. Therefore, the microspheres of the present invention have excellent ion-exchange performance, ability to separate hemoglobin and its variants with high specificity, and high detection speed. The PSDVB-NTA ion-exchange packing microspheres of the present invention can withstand a pressure of 20 MPa or more, and have the advantages of high separation capacity, low non-specific adsorption of protein, high compressive resistance, good dispersibility, as well as uniform and controllable particle size.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can

be made without departing from the concept of the present disclosure, and all fall within the protection scope of the present disclosure. Therefore, the patent protection of the present disclosure shall be defined by the appended claims.

## Claims

1. A vinyl monomer-polyvinyl crosslinking agent copolymer non-porous microsphere, comprising:

    a vinyl monomer-polyvinyl crosslinking agent copolymer matrix microsphere, wherein the vinyl monomer-polyvinyl crosslinking agent copolymer matrix microsphere is modified with a hydroxyl group; and
    an epoxy compound grafted to the vinyl monomer-polyvinyl crosslinking agent copolymer matrix microsphere via the hydroxyl group, wherein the epoxy compound comprises at least two epoxy groups.

2. The vinyl monomer-polyvinyl crosslinking agent copolymer non-porous microsphere according to claim 1, wherein the epoxy compound is at least one of sorbitol tetraglycidyl ether, pentaerythritol tetraglycidyl ether, polyglycerol polyglycidyl ether, diglycerol triglycidyl ether, 1,4-butanediol diglycidyl ether, glycerol diglycidyl ether, glycerol triglycidyl ether, ethylene glycol diglycidyl ether, poly(ethylene glycol) diglycidyl ether, neopentyl glycol diglycidyl ether, or 2,2-bis(4-(2,3-epoxypropoxy) phenyl)propane; and preferably, the epoxy compound is at least one of sorbitol tetraglycidyl ether or polyglycerol polyglycidyl ether.

3. The vinyl monomer-polyvinyl crosslinking agent copolymer non-porous microsphere according to claim 1, wherein the vinyl monomer-polyvinyl crosslinking agent copolymer matrix microsphere comprises:

    a vinyl monomer-polyvinyl crosslinking agent copolymer particle, wherein the vinyl monomer-polyvinyl crosslinking agent copolymer particle is modified with an epoxy group, and the vinyl monomer-polyvinyl crosslinking agent copolymer particle is formed by crosslinking a polystyrene seed microsphere with a vinyl monomer via a polyvinyl crosslinking agent, and the vinyl monomer comprises the epoxy group; and
    a hydroxyl compound grafted to the vinyl monomer-polyvinyl crosslinking agent copolymer particle via the epoxy group, wherein the hydroxyl compound comprises the hydroxyl group.

4. The vinyl monomer-polyvinyl crosslinking agent copolymer non-porous microsphere according to claim 3, wherein the vinyl monomer-polyvinyl crosslinking agent copolymer matrix microsphere has a degree of crosslinking of 50% to 80%; and preferably, the vinyl monomer-polyvinyl crosslinking agent copolymer matrix microsphere has a degree of crosslinking of 65% to 75%.

5. The vinyl monomer-polyvinyl crosslinking agent copolymer non-porous microsphere according to claim 3, wherein the vinyl monomer is at least one of 4-vinylphenyl glycidyl ether, 4-vinylbenzyl glycidyl ether, or glycidyl ether methacrylate;

    the polystyrene seed microsphere has an average particle size D50 of 0.3 $\mu$m to 5 $\mu$m; and preferably, the polystyrene seed microsphere has an average particle size D50 of 0.5 $\mu$m to 3 $\mu$m;
    the hydroxyl compound is at least one of ethylene glycol, 1,3-propylene glycol, or 1,4-butanediol; and/or
    the polyvinyl crosslinking agent is at least one of divinyl benzene, divinyl methylbenzene, ethylene glycol dimethacrylate, poly(ethylene glycol) dimethacrylate, trivinyl benzene, divinyl naphthalene, or trivinyl naphthalene; and preferably, the polyvinyl crosslinking agent is divinyl benzene.

6. The vinyl monomer-polyvinyl crosslinking agent copolymer non-porous microsphere according to claim 3, wherein the amount of the vinyl monomer is 5% to 40% of the total weight of the vinyl monomer and the polyvinyl crosslinking agent; preferably, the amount of the vinyl monomer is 10% to 30% of the total weight of the vinyl monomer and the polyvinyl crosslinking agent; and more preferably, the amount of the vinyl monomer is 10% to 20% of the total weight of the vinyl monomer and the polyvinyl crosslinking agent.

7. The vinyl monomer-polyvinyl crosslinking agent copolymer non-porous microsphere according to claim 3, wherein the molar ratio of the epoxy compound to the epoxy group modified on the vinyl monomer-polyvinyl crosslinking agent copolymer particle is (1-20): 1; preferably, the molar ratio of the epoxy compound to the epoxy group modified on the vinyl monomer-polyvinyl crosslinking agent copolymer particle is (3-10): 1; and more preferably, the molar ratio of the epoxy compound to the epoxy group modified on the vinyl monomer-polyvinyl crosslinking agent copolymer particle is (4-6):1.

**8.** The vinyl monomer-polyvinyl crosslinking agent copolymer non-porous microsphere according to any one of claims 1 to 7, further comprising an active group grafted onto the epoxy compound; and preferably, the active group comprises an NTA group.

**9.** The vinyl monomer-polyvinyl crosslinking agent copolymer non-porous microsphere according to claim 8, wherein the active group comprises an NTA group, the NTA group comprises an active terminal group, and the active terminal group is at least one of an aspartic acid terminal group, a lysine terminal group, a cysteine terminal group, or a glutamate terminal group.

**10.** The vinyl monomer-polyvinyl crosslinking agent copolymer non-porous microsphere according to any one of claims 1 to 7 and 9, wherein the vinyl monomer-polyvinyl crosslinking agent copolymer non-porous microsphere has an average particle size D50 of 2 μm to 10 μm; and preferably, the vinyl monomer-polyvinyl crosslinking agent copolymer non-porous microsphere has an average particle size D50 of 3 μm to 6 μm.

**11.** A method for preparing a vinyl monomer-polyvinyl crosslinking agent copolymer non-porous microsphere, comprising following steps of:

forming a vinyl monomer-polyvinyl crosslinking agent copolymer matrix microsphere, wherein the vinyl monomer-polyvinyl crosslinking agent copolymer matrix microsphere is modified with a hydroxyl group; and
grafting an epoxy compound onto the vinyl monomer-polyvinyl crosslinking agent copolymer matrix microsphere via a hydroxyl reaction, wherein the epoxy compound comprises at least two epoxy groups.

**12.** The method according to claim 11, wherein the epoxy compound is at least one of sorbitol tetraglycidyl ether, pentaerythritol tetraglycidyl ether, polyglycerol polyglycidyl ether, diglycerol triglycidyl ether, 1,4-butanediol diglycidyl ether, glycerol diglycidyl ether, glycerol triglycidyl ether, ethylene glycol diglycidyl ether, poly(ethylene glycol) diglycidyl ether, neopentyl glycol diglycidyl ether, or 2,2-bis(4-(2,3-epoxy-propoxy)phenyl)propane; and preferably, the epoxy compound is at least one of sorbitol tetraglycidyl ether or polyglycerol polyglycidyl ether.

**13.** The method according to claim 12, wherein the step of forming the vinyl monomer-polyvinyl crosslinking agent copolymer matrix microsphere comprises:

forming a vinyl monomer-polyvinyl crosslinking agent copolymer particle, modified with an epoxy group, including carrying out a polymerization among a polystyrene seed microsphere as a seed, a vinyl monomer, and a polyvinyl crosslinking agent in a medium in the presence of a stabilizer and an emulsifier through a seed swelling method, the vinyl monomer including the epoxy group; and
grafting a hydroxyl compound onto the vinyl monomer-polyvinyl crosslinking agent copolymer particle via an epoxy reaction, the hydroxyl compound comprising the hydroxyl group.

**14.** The method according to claim 13, wherein the vinyl monomer is at least one of 4-vinylphenyl glycidyl ether, 4-vinylbenzyl glycidyl ether, or glycidyl ether methacrylate; the polystyrene seed microsphere has an average particle size D50 of 0.3 μm to 5 μm; and preferably, the polystyrene seed microsphere has an average particle size D50 of 0.5 μm to 3 μm;

the hydroxyl compound is at least one of ethylene glycol, 1,3-propylene glycol, or 1,4-butanediol; and/or
the polyvinyl crosslinking agent is at least one of divinyl benzene, divinyl methylbenzene, trivinyl benzene, ethylene glycol dimethacrylate, poly(ethylene glycol) dimethacrylate, divinyl naphthalene, or trivinyl naphthalene; and preferably, the polyvinyl crosslinking agent is divinyl benzene.

**15.** The method according to claim 13, wherein the amount of the vinyl monomer is 5% to 40% of the total weight of the vinyl monomer and the polyvinyl crosslinking agent; preferably, the amount of the vinyl monomer is 10% to 30% of the total weight of the vinyl monomer and the polyvinyl crosslinking agent; and more preferably, the amount of the vinyl monomer is 10% to 20% of the total weight of the vinyl monomer and the polyvinyl crosslinking agent.

**16.** The method according to claim 13, wherein the molar ratio of the epoxy compound to the epoxy group modified on the vinyl monomer-polyvinyl crosslinking agent copolymer particle is (1-20): 1; preferably, the molar ratio of the epoxy compound to the epoxy group modified on the vinyl monomer-polyvinyl crosslinking agent copolymer particle is (3-10): 1; and more preferably, the molar ratio of the epoxy compound to the epoxy group modified on the vinyl monomer-polyvinyl crosslinking agent copolymer particle is (4-6): 1.

**17.** The method according to claim 13, wherein an initiator adopted in the polymerizing is an oil-soluble initiator; and preferably, the oil-soluble initiator is an oil-soluble peroxide or an oil-soluble azo compound.

**18.** The method according to claim 13, wherein the stabilizer is a water-soluble polymer; and preferably, the stabilizer is at least one of polyvinyl alcohol, polyvinyl pyrrolidone, or modified cellulose.

**19.** The method according to any one of claims 11 to 18, further comprising a step of forming an active group on the epoxy compound by reacting or grafting; preferably, the active group comprises a NTA group; and further preferably, the NTA group is formed by a N,N-bis(carboxymethyl) lysine method, an active terminal amino acid method, a dicarboxylic acid structure amino acid carboxylation method, or a method including forming an aldehyde group first and then an $\alpha$-amino acid.

**20.** Use of the vinyl monomer-polyvinyl crosslinking agent copolymer non-porous microsphere according to any one of claims 1 to 10, or the vinyl monomer-polyvinyl crosslinking agent copolymer non-porous microsphere prepared by the method according to any one of claims 11 to 19, as chromatographic column packing.

**21.** Use of the vinyl monomer-polyvinyl crosslinking agent copolymer non-porous microsphere according to any one of claims 1 to 10, or the vinyl monomer-polyvinyl crosslinking agent copolymer non-porous microsphere prepared by the method according to any one of claims 11 to 19, in detection of a biological component.

**22.** The use according to claim 21, wherein the biological component is a hemoglobin-based biological component.

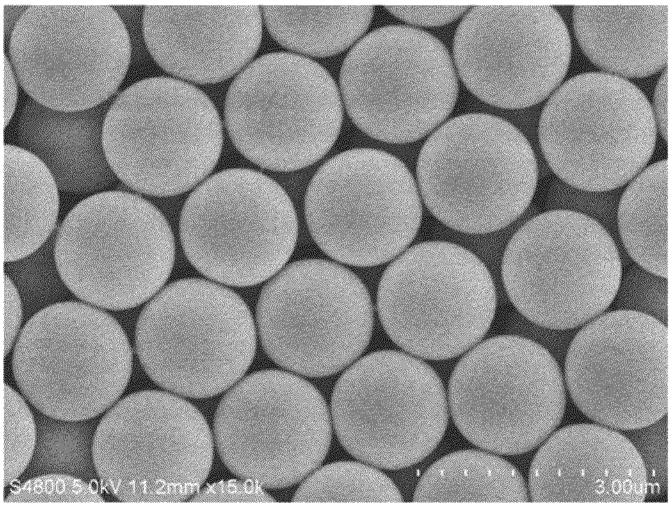


FIG. 1

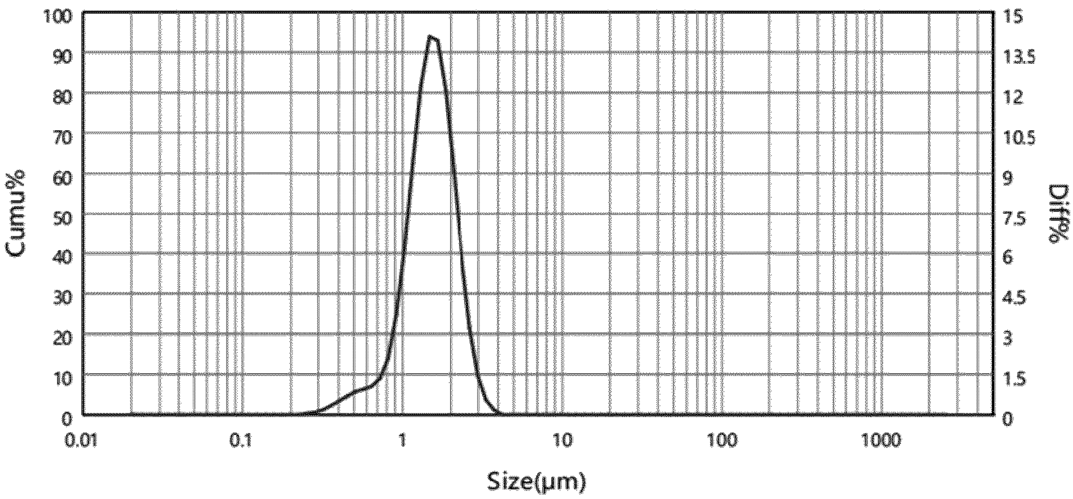


FIG. 2

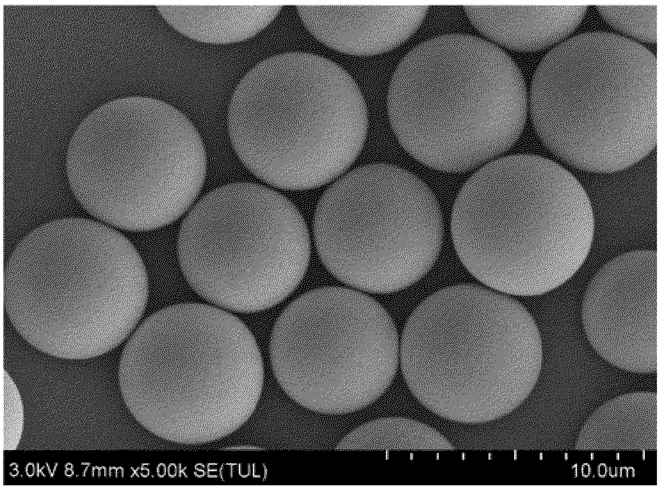


FIG. 3

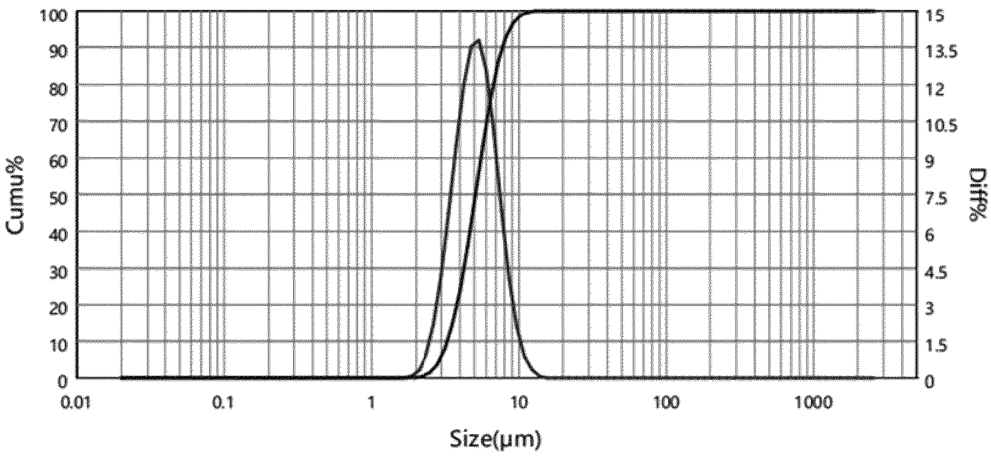


FIG. 4

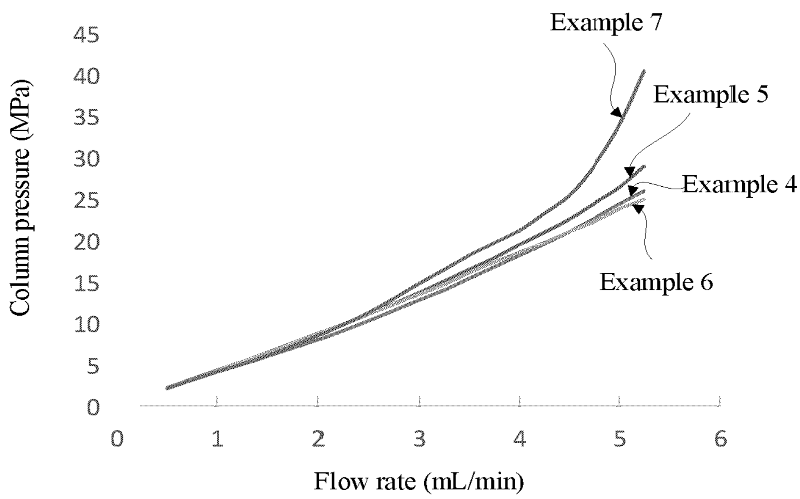


FIG. 5

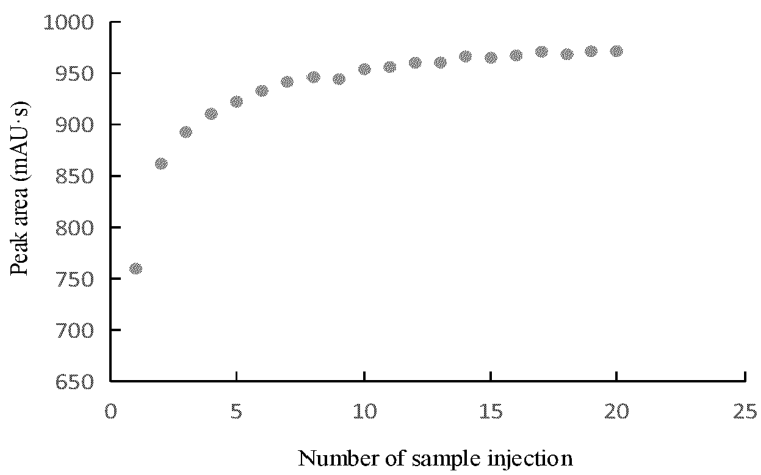


FIG. 6

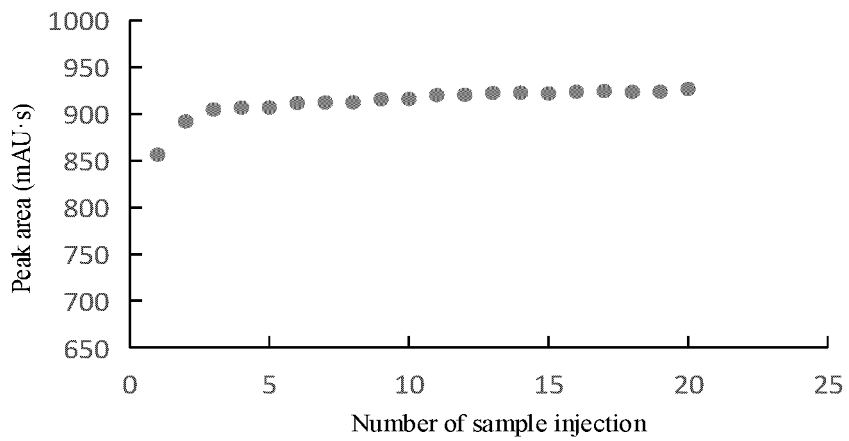


FIG. 7

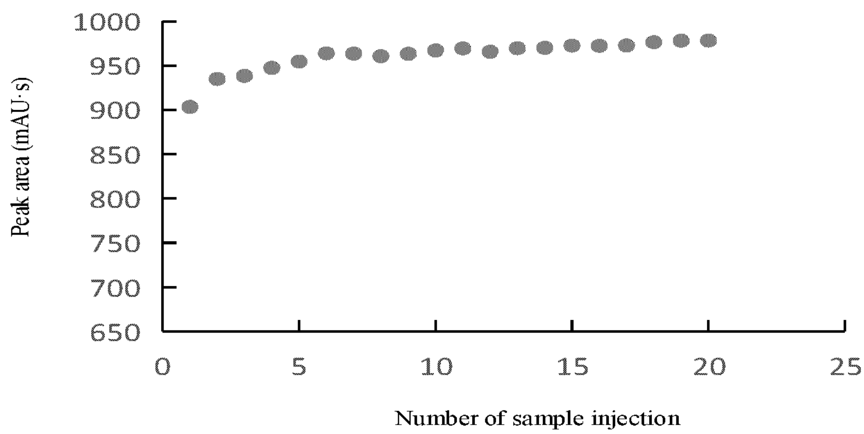


FIG. 8

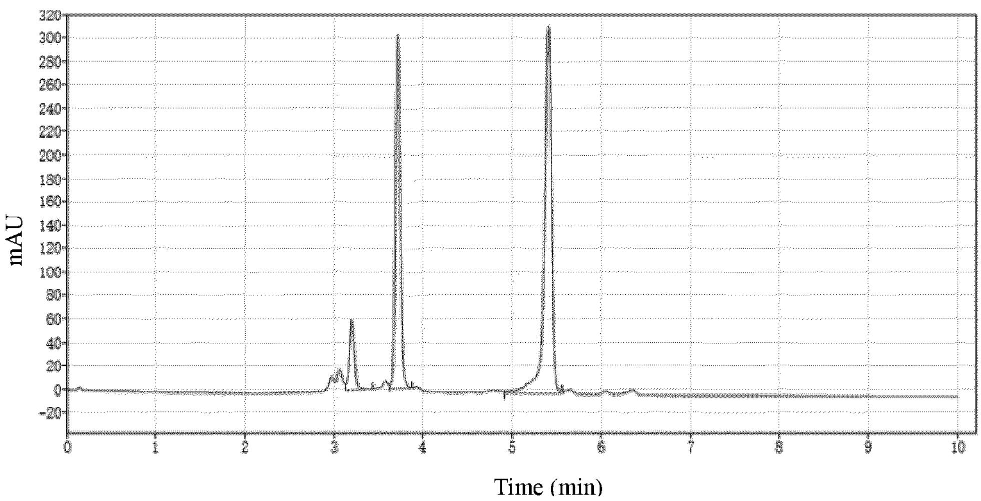


FIG. 9

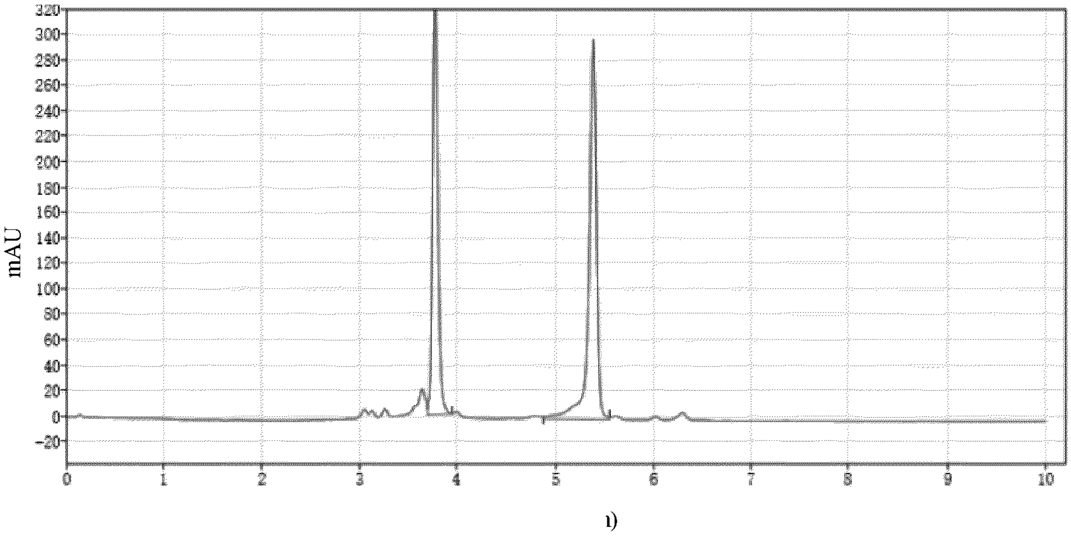


FIG. 10

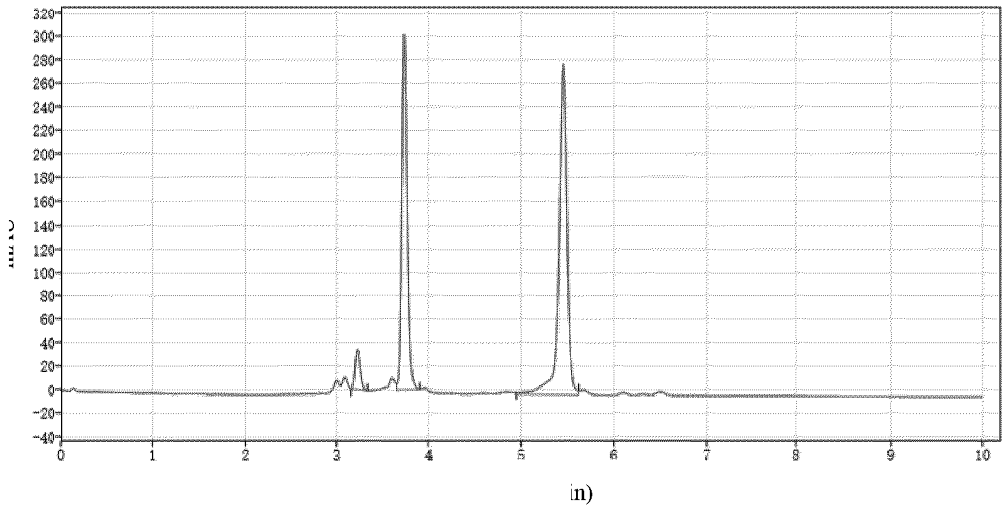


FIG. 11

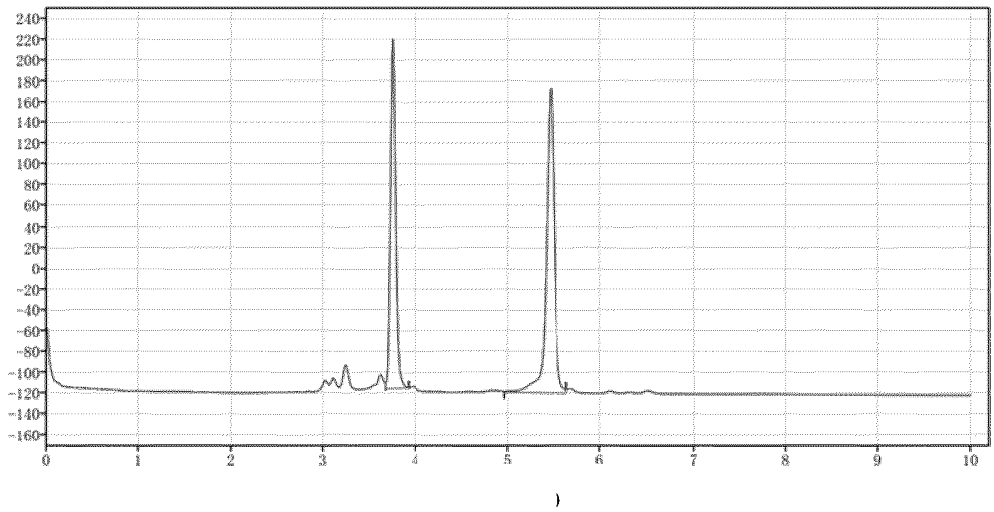


FIG. 12

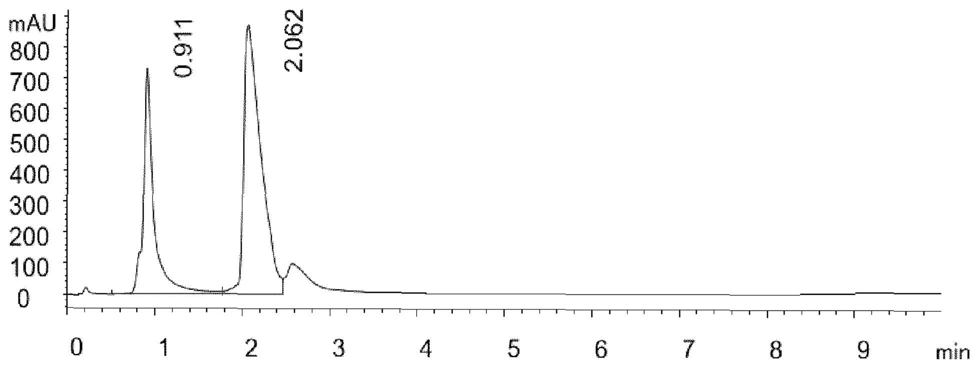


FIG. 13

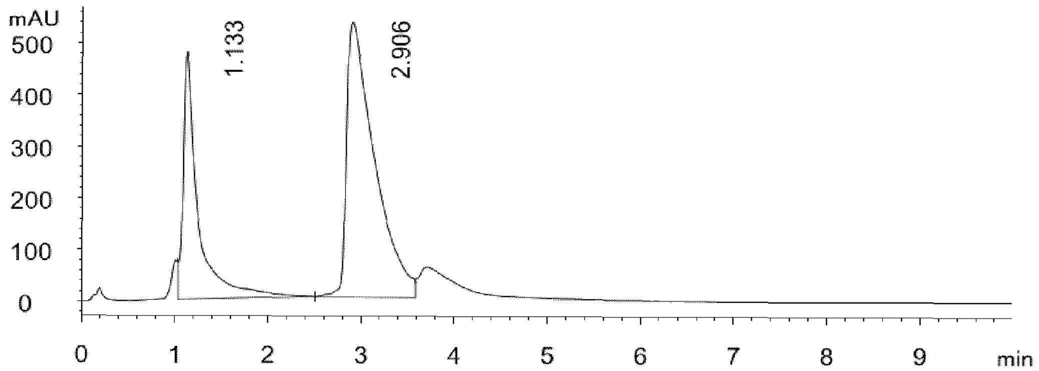


FIG. 14

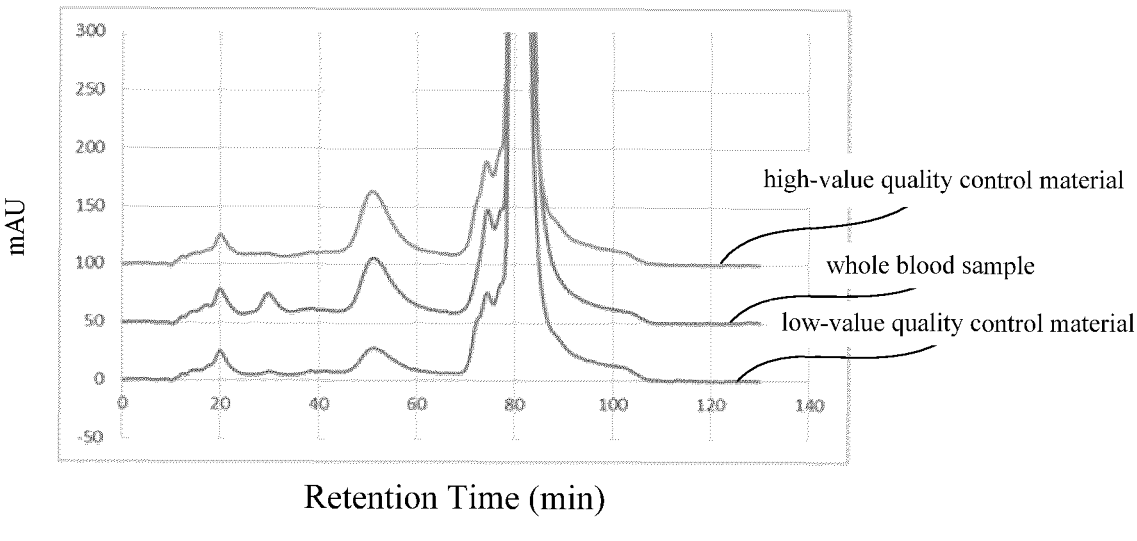


FIG. 15

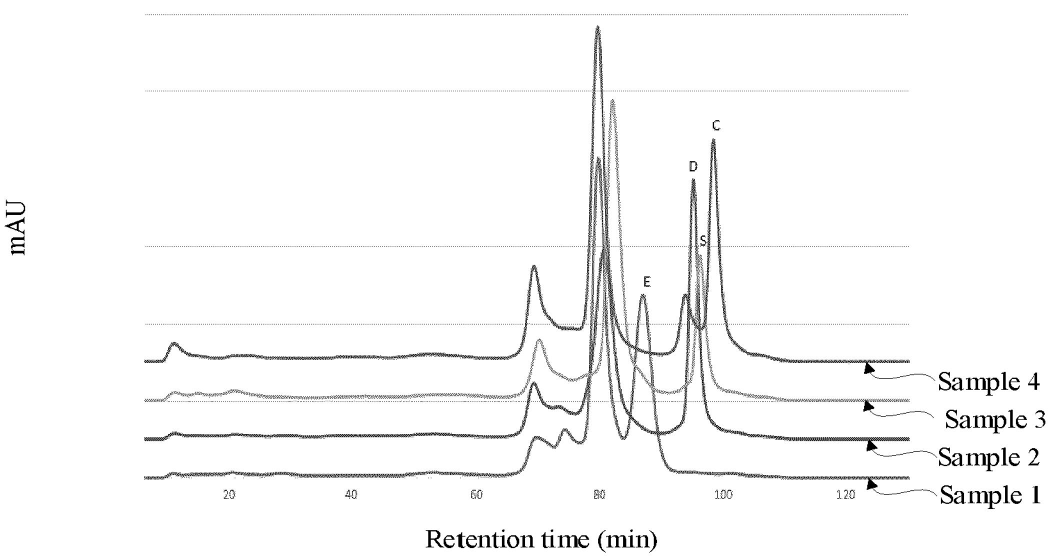
mAU
C
D
S
E
Sample 4
Sample 3
Sample 2
Sample 1
20
40
60
80
100
120
Retention time (min)

FIG. 16

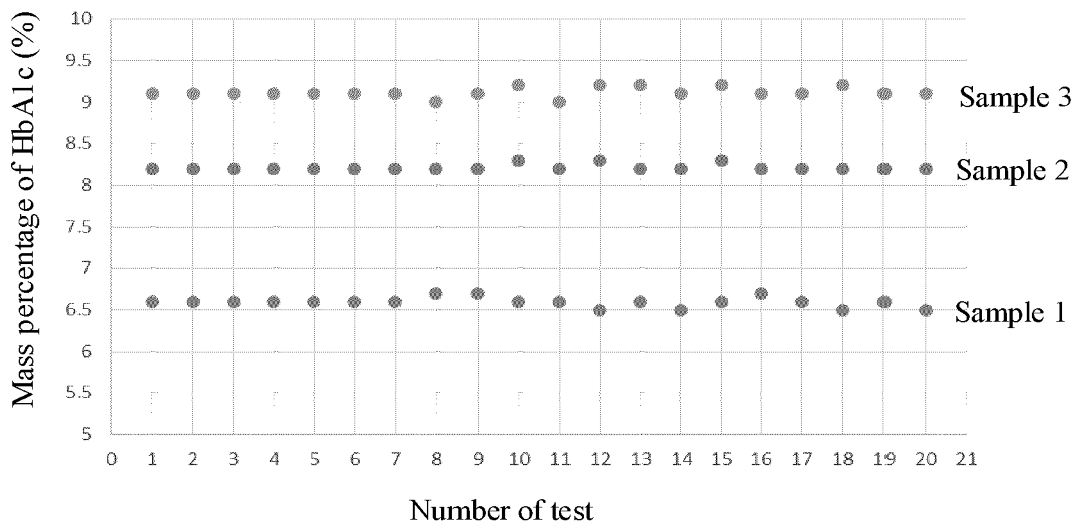
Mass percentage of HbA1c (%)
10
9.5
9
8.5
8
7.5
7
6.5
6
5.5
5
0
1
2
3
4
5
6
7
8
9
10
11
12
13
14
15
16
17
18
19
20
21
Sample 3
Sample 2
Sample 1
Number of test

FIG. 17

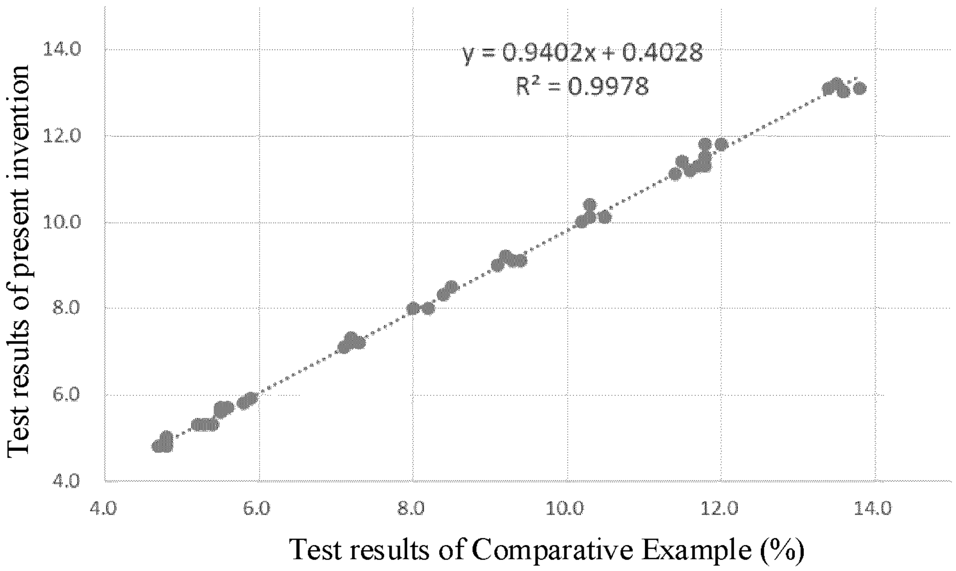
y = 0.9402x + 0.4028
R² = 0.9978
Test results of present invention
14.0
12.0
10.0
8.0
6.0
4.0
4.0
6.0
8.0
10.0
12.0
14.0
Test results of Comparative Example (%)

FIG. 18

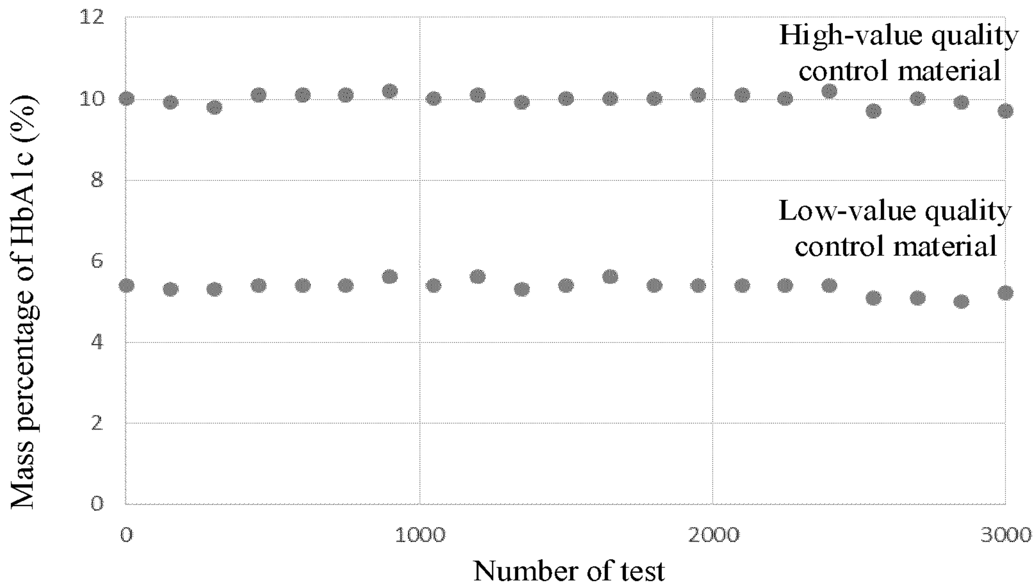
High-value quality control material
Low-value quality control material
Mass percentage of HbA1c (%)
12
10
8
6
4
2
0
0
1000
2000
3000
Number of test

FIG. 19

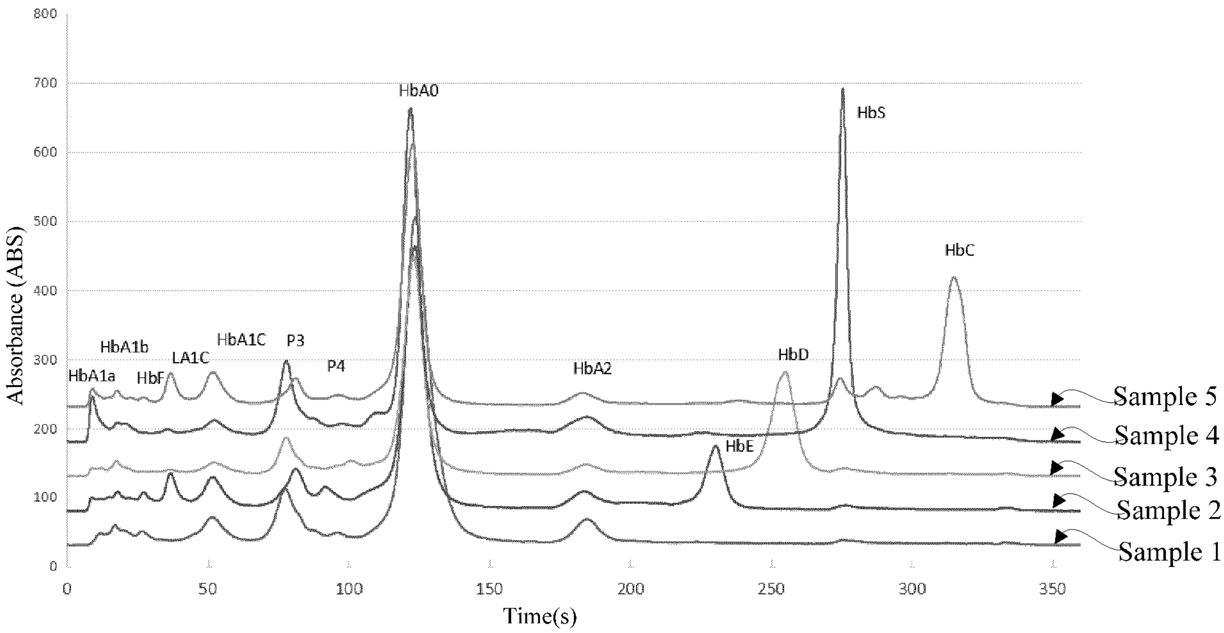
800
700
600
500
400
300
200
100
0
Absorbance (ABS)
HbA1a
HbA1b
HbF
LA1C
HbA1C
P3
P4
HbA0
HbA2
HbE
HbD
HbS
HbC
Sample 5
Sample 4
Sample 3
Sample 2
Sample 1
0
50
100
150
200
250
300
350
Time(s)

FIG. 20

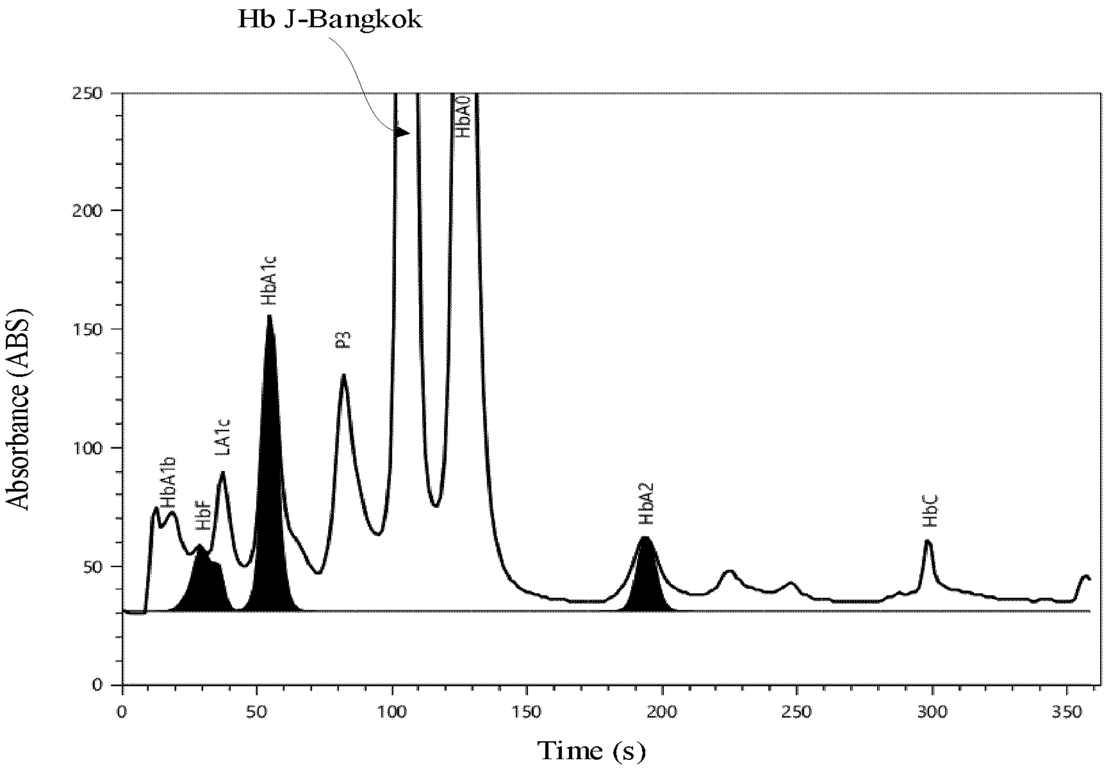
Hb J-Bangkok
250
200
150
100
50
0
Absorbance (ABS)
HbA1b
HbF
LA1c
HbA1c
P3
HbA0
HbA2
HbC
0
50
100
150
200
250
300
350
Time (s)

FIG. 21

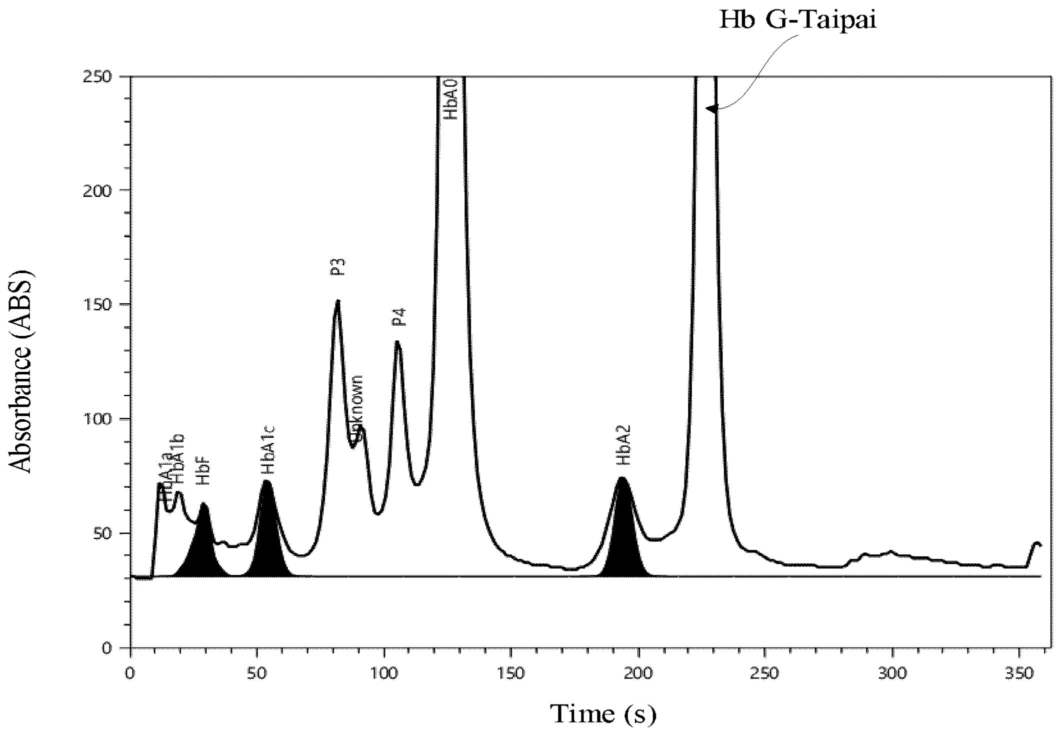
Hb G-Taipai
250
200
150
100
50
0
Absorbance (ABS)
HbA1a
HbA1b
HbF
HbA1c
P3
Unknown
P4
HbA0
HbA2
0
50
100
150
200
250
300
350
Time (s)

FIG. 22

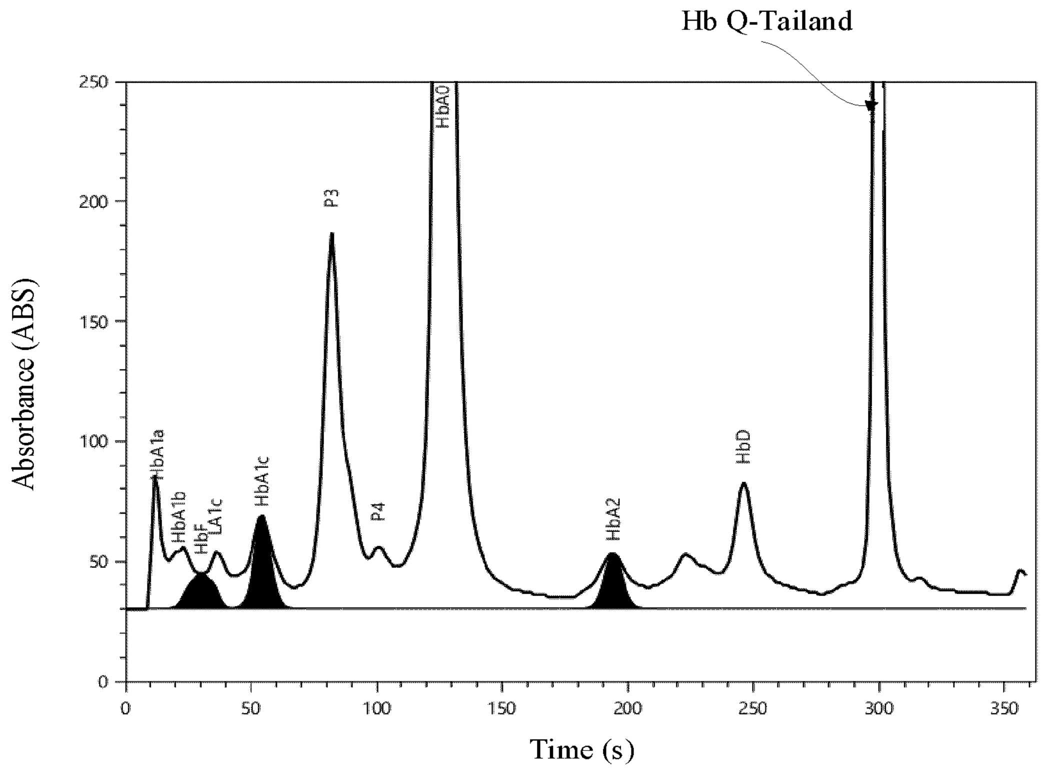
Hb Q-Tailand
250
200
150
100
50
0
Absorbance (ABS)
HbA1a
HbA1b
HbF
LA1c
HbA1c
P3
P4
HbA0
HbA2
HbD
0
50
100
150
200
250
300
350
Time (s)

FIG. 23

## INTERNATIONAL SEARCH REPORT

International application No.
**PCT/CN2022/083708**

### A. CLASSIFICATION OF SUBJECT MATTER

B01J 20/281(2006.01)i；C08F 2/00(2006.01)i

According to International Patent Classification (IPC) or to both national classification and IPC

### B. FIELDS SEARCHED

Minimum documentation searched (classification system followed by classification symbols)

B01J;C08F

Documentation searched other than minimum documentation to the extent that such documents are included in the fields searched

Electronic data base consulted during the international search (name of data base and, where practicable, search terms used)

CNKI, STN, VEN.VCN, DWPI, CNABS: 苯乙烯, 环氧基, +缩水甘油醚, 无孔, 微球, 羟基, styrene, epoxy, +glycidyl, non? porous, microspere, hydroxyl

### C. DOCUMENTS CONSIDERED TO BE RELEVANT

| Category* | Citation of document, with indication, where appropriate, of the relevant passages | Relevant to claim No. |
|---|---|---|
| PX | CN 113512152 A (SHENZHEN LIFOTRONIC TECHNOLOGY CO., LTD.) 19 October 2021 (2021-10-19)<br>entire document | 1-22 |
| X | WO 2012036140 A1 (KANEKA CORP. et al.) 22 March 2012 (2012-03-22)<br>description, pages 6-16 | 1-22 |
| X | JP 2010133734 A (TOSOH CORP.) 17 June 2010 (2010-06-17)<br>description, pages 3-9, embodiment 3 | 1-22 |
| X | JP 2018197294 A (TOSOH CORP.) 13 December 2018 (2018-12-13)<br>description, pages 3-10 | 1-22 |
| X | US 2020047084 A1 (HITACHI CHEMICAL CO., LTD.) 13 February 2020 (2020-02-13)<br>description, pages 2-9 | 1-22 |
| X | WO 2020036151 A1 (HITACHI CHEMICAL CO., LTD.) 20 February 2020 (2020-02-20)<br>description, pages 2-9 | 1-22 |
| X | EP 0180563 A2 (EXPLOATERINGS AB TBF) 07 May 1986 (1986-05-07)<br>embodiment 1 | 1-22 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 June 2022** | **06 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

**INTERNATIONAL SEARCH REPORT**

International application No.
**PCT/CN2022/083708**

**C. DOCUMENTS CONSIDERED TO BE RELEVANT**

| Category* | Citation of document, with indication, where appropriate, of the relevant passages | Relevant to claim No. |
|---|---|---|
| X | US 4452918 A (ASAHI CHEMICAL IND.) 05 June 1984 (1984-06-05)<br>embodiments 1-3 | 1-22 |
| X | US 5438077 A (TOSON CORP.) 01 August 1995 (1995-08-01)<br>description, columns 1-3 | 1-22 |
| A | CN 110520216 A (DIONEX CORPORATION) 29 November 2019 (2019-11-29)<br>description, pages 9-12 | 1-22 |
| A | CN 101045755 A (SHANGHAI JIAO TONG UNIVERSITY) 03 October 2007 (2007-10-03)<br>claim 1 | 1-22 |
| A | WO 9009832 A1 (EASTMAN KODAK COMPANY) 07 September 1990 (1990-09-07)<br>description, pages 5-10 | 1-22 |
| A | CN 107163170 A (NINGXIA UNIVERSITY) 15 September 2017 (2017-09-15)<br>claim 1 | 1-22 |

**INTERNATIONAL SEARCH REPORT**
**Information on patent family members**

International application No.
**PCT/CN2022/083708**

| Patent document cited in search report | | | Publication date (day/month/year) | Patent family member(s) | | | Publication date (day/month/year) |
|---|---|---|---|---|---|---|---|
| CN | 113512152 | A | 19 October 2021 | None | | | |
| WO | 2012036140 | A1 | 22 March 2012 | JP | WO2012036140 | A1 | 03 February 2014 |
| JP | 2010133734 | A | 17 June 2010 | None | | | |
| JP | 2018197294 | A | 13 December 2018 | None | | | |
| US | 2020047084 | A1 | 13 February 2020 | WO | 2018181738 | A1 | 04 October 2018 |
| | | | | JP | WO2018181738 | A1 | 13 February 2020 |
| | | | | EP | 3603798 | A1 | 05 February 2020 |
| WO | 2020036151 | A1 | 20 February 2020 | JP | 2021181037 | A | 25 November 2021 |
| EP | 0180563 | A2 | 07 May 1986 | JP | S61165661 | A | 26 July 1986 |
| | | | | SE | 8405431 | D0 | 30 October 1984 |
| US | 4452918 | A | 05 June 1984 | EP | 0066165 | A1 | 08 December 1982 |
| | | | | AT | 19089 | T | 15 April 1986 |
| | | | | CS | 348582 | A2 | 13 June 1985 |
| | | | | JP | S57190003 | A | 22 November 1982 |
| | | | | DE | 3270365 | D1 | 15 May 1986 |
| | | | | CA | 1194644 | A | 01 October 1985 |
| US | 5438077 | A | 01 August 1995 | DE | 4229866 | A1 | 11 March 1993 |
| | | | | JP | H0564748 | A | 19 March 1993 |
| CN | 110520216 | A | 29 November 2019 | US | 2019358621 | A1 | 28 November 2019 |
| | | | | WO | 2018136666 | A1 | 26 July 2018 |
| | | | | EP | 3570974 | A1 | 27 November 2019 |
| CN | 101045755 | A | 03 October 2007 | None | | | |
| WO | 9009832 | A1 | 07 September 1990 | EP | 0460026 | A1 | 11 December 1991 |
| | | | | JP | H04503408 | A | 18 June 1992 |
| CN | 107163170 | A | 15 September 2017 | None | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 109663384 A